# EUROPEAN PATENT SPECIFICATION

(11) **EP 2 403 174 B1**
(45) Date of publication and mention of the grant of the patent: **30.10.2013**
(21) Application number: 10305698.2
(22) Date of filing: 29.06.2010
(51) Int. Cl.: H04L 1/00, H04L 1/18

(54) **Method for transmission of data in a radio communication system, first network node and second network node thereof**
Verfahren zur Übertragung von Daten in einem Funkkommunikationssystem, erster Netzwerkknoten und zweiter Netzwerkknoten dafür
Procédé de transmission de données dans un système de communication radio, premier nýud de réseau et deuxième nýud de réseau correspondants

(43) Date of publication of application: 04.01.2012
(73) Proprietor: Alcatel Lucent, 75007 Paris (FR)
(72) Inventor: Braun, Volker, 70176, Stuttgart (DE)
(74) Representative: Wetzel, Emmanuelle

(56) References cited:
- EP-A1- 1 983 783
- EP-A2- 2 178 239
- WO-A2-2008/111795
- US-A1- 2007 153 672

## Description

### FIELD OF THE INVENTION

The invention relates to wireless communications and, more particularly but not exclusively, to retransmission of data in wireless communications.

### BACKGROUND

Several retransmission schemes have been developed for correcting transmission errors on a wireless link between a base station and a mobile station.

Using an automatic repeat request (ARQ = automatic repeat request) scheme, a transmitter adds cyclic redundancy check information (CRC = cyclic redundancy check) to data to be transmitted. A receiver can use the CRC information to detect an error in the received data. Depending on a detection of the error, the receiver sends a positive acknowledgement (ACK = acknowledgement) or a negative acknowledgement (NACK = negative acknowledgement) to the transmitter. The receiver does not store received data, which cannot be received error free. If the transmitter receives a NACK, the transmitter retransmits the data at least a second time.

A hybrid ARQ scheme (HARQ = hybrid ARQ) combines forward error correction coding (FEC = forward error correction) with the ARQ scheme. FEC coding introduces redundancy by adding parity bits to information bits of the data or by transmitting only the parity bits. The parity bits are calculated from the information bits using a specific coding scheme and a specific rate matching. Usually the HARQ scheme is combined with soft combining. The soft combining avoids a discarding of an erroneously received data packet by storing the erroneously received data packet in a data buffer of the receiver. This allows to retransmit either the whole data packet in a same way with all information bits (denoted as chase combining) or to retransmit only a subset of bits or none of the information bits (denoted as incremental redundancy).

HARQ schemes can be synchronous, meaning that the retransmission occurs only at a fixed time after the previous transmission, or can be asynchronous, meaning that the retransmission can occur at any time after the previous transmission.

For the asynchronous mode it is required, that the receiver of the retransmission needs to receive an indication to which previous transmission the retransmission belongs.

By using incremental redundancy a retransmission may use a different transport block size (TBS = transport block size) and/or different redundancy version parameters than a previous transmission.

For each transmission and retransmission additional information such as physical resource block assignment, applied modulation scheme, coding scheme or redundancy version needs to be transmitted from the transmitter to the receiver of the transmission or the retransmission. This information may add up to a considerable amount of signaling information to be transmitted. Especially, the information according to the physical resource block assignment required for each initial transmission or each retransmission is quite large.

In the radio communication standard 3GPP LTE (3GPP = Third Generation Partnership Program, LTE = Long Term Evolution) for example, the signaling information is transmitted on a downlink control channel. Even so, all ACKs and NACKs account for a considerable amount of signaling information on an uplink channel. Radio resources used for the signaling information on the downlink and the uplink cannot be used for user data. EP 2178 239 A2 discloses a transmission data generating apparatus for use in a transmitter of a communication system. The transmission data generating apparatus contains a redundancy data obtaining unit for obtaining redundancy data of information data which was transmitted to a receiver and was not received successfully by the receiver, a new data obtaining unit for extracting new data, which has not been transmitted to the receiver, and a combination unit for combining the redundancy data and the new data to form a transmission data to be subsequently transmitted to the receiver.

### SUMMARY

The way of determining the combination of the first user data and the second user data effects an amount of signalling information to be transmitted to the receiver, effects data handling at the transmitter how to combine the data and effects data handling at the receiver how to recover the first user data and the second user data.

It is an object of the invention to provide an improved method for transmission of data from the transmitter to the receiver requiring signaling of less control information.

The object is achieved by a method according to claim 1. The object is further achieved by a first network node for use in a radio communication system according to claim 7 and by a second network node for use in a radio communication system according to claim 9. The first network node may be a base station, a relay station or a mobile station. Likewise, the second network node may be a mobile station, a relay station or a base station.

The method according to the present invention offers a first benefit of reducing signalling information for different HARQ processes to be transmitted from the transmitter to the receiver of the combination by using for example a same modulation scheme and/or a same coding scheme and/or a same redundancy version for the third user data and the at least fourth user data.

The method offers a second benefit of reducing signalling information for different HARQ processes to be responded from the receiver to the transmitter of the combination by providing for example a single NACK or a single ACK for the received combination.

The method offers a third benefit of enabling to retransmit the first user data entirely again within the combination and thereby not requiring soft combining at the receiver.

This provides a possibility of combining two retransmissions each comprising parity information of data of a previous transmission.

In further embodiments of the invention, the parity information of the first user data and the parity information of the at least one second user data are multiplexed prior to or after modulation. This allows for flexibly adapting the determination of the combination to capabilities of the second network node or to a quality parameter of a wireless link between the first and the second network node such as a level of a signal-to-noise ratio.

In even further embodiments of the invention, the parity information of the first user data and the parity information of the at least one second user data are modulated with a same modulation scheme or with different modulation schemes. This additionally allows for flexibly adapting the determination of the combination to capabilities of the second network node or to a quality parameter of a wireless link between the first and the second network node such as a level of a signal-to-noise ratio and further allows to independently adapt the modulation scheme of the third user data or the at least one fourth user data.

According to a preferred embodiment of the invention, the method further comprises the step of switching between the combination of the third user data comprising the parity information of the first user data and of the at least one fourth user data comprising the parity information of the at least one second user data and the combination of the third user data comprising the parity information of the first user data and of the at least one fourth user data comprising the user data information bits not transmitted before.

According to even preferred embodiments of the invention, the method further comprises the step of switching between the combination of the third user data comprising the parity information of the first user data and of the at least one fourth user data comprising the parity information of the at least one second user data and single retransmissions of the third user data comprising the parity information of the first user data and the at least one fourth user data comprising the parity information of the at least one second user data or switching between the combination of the third user data comprising the parity information of the first user data and of the at least one fourth user data comprising the user data information bits not transmitted before and a single retransmission of the third user data comprising the parity information of the first user data and a single initial transmission of the at least one fourth user data comprising the user data information bits not transmitted before.

According to an alternative embodiment of the invention, the determining step for the combination is applied, if the second negative acknowledgement or a positive acknowledgement is received within a predefined time interval at the first network node. This allows applying the combination for example only for delay-insensitive quality of services by setting an adequate value for the predefined time interval.

According to the preferred and even preferred embodiments of the invention, the switching step may depend on a fill level of a buffer at the first network node or on requirements of a quality of service class of the third user data and the at least one fourth user data such as a maximum delay value or other parameters.

According to further preferred embodiments of the invention, the method may be a synchronous automatic repeat request process and wherein an indication of the third user data depending on the first user data and at least one indication of the at least one fourth user data depending on the at least one second user data or being new user data is implicitly provided to the second network node depending on a positive or negative acknowledgement of the at least one second user data. The second network node may implicitly know from a time difference between two successive negative acknowledgements or a time difference between a positive and a negative successive acknowledgement for which user data a retransmission or a first transmission may be executed by the first network node. This provides a benefit of not requiring signaling an indication to the second network node, to which first user data the third user data belong and of not requiring signaling a further indication, whether the at least one fourth user data depend on the at least one second user data or on new user data, and if the at least one fourth user data depend on the at least one second user data not requiring signaling to which at least one second user data the at least one fourth user data belong.

In an even further preferred embodiment of the invention, the method further comprises the step of multiplexing at least one physical layer processing parameter such as modulation scheme, coding scheme or redundancy version of the at least one fourth user data to the combination of the third user data and the at least one fourth user data. This provides the advantage of reducing signaling information on a signaling channel such as a downlink control channel used in HSDPA (HSDPA = High Speed Downlink Packet Access) or LTE by using the combined transmission. Instead of loading the signaling channel, which often have been allocated limited radio resources given by a radio communication standard, with processing parameters of the at least one fourth user data, signaling information according to the physical layer processing parameters of the at least fourth user is loaded on a data channel, which is used for the transmission of the combination.

In further preferred embodiments of the invention, the method further comprises the step of applying or adapting the transmission of the combination depending on a quality of service class of the third user data and the at least one fourth user data. This allows for switching from a conventional retransmission for a single first transmission to the combined retransmission depended on parameters of the current quality of service class such as maximum allowed delay or maximum allowed packet transmission time jitter. The combined transmission is preferably used for delay-insensitive services such as web browsing or file transfer and not used for services such as gaming or voice over IP.

If for example a user stops gaming on a mobile device (being the second network node) and starts web browsing, the transmission of user data from the first network node to the second network node may be switched from the conventional retransmission for the single first transmission to the combined transmission. This allows further for adapting the combined transmission depending on the parameters of the current quality of service by changing for example a modulation scheme of the third user data and/or a modulation scheme of the at least one fourth user data and/or a coding scheme of the third user data and/or a coding scheme of the at least one fourth user data.

If for example a user stops web browsing on the mobile device and starts a file transfer such as a video download, a link adaptation such as a coding scheme or a modulation scheme of the combined transmission of user data from the first network node to the second network node may be adapted for example according to an allowed number of missing or defective video frames within a specific time or according to a residual block error rate.

According to an even further preferred embodiment of the invention, the method further comprises the step of providing an indication for the transmission of the combination by the first network node to the second network node and wherein the transmission of the combination is provided by a third network node of the radio communication system. The even further preferred embodiment may be especially applied, when a relay station is used between a base station and a mobile station. The relay station may store the first user data and/or the at least one second user data. If a retransmission of the first user data or a retransmission of the first user data and the at least one second user data is required, the relay station provides the combined transmission to the second network node and the first network node such as the base station needs only provides indication of the combined transmission. Thereby, processing power can be reduced at the base station.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows a block diagram of a radio communication network.
Figure 2 shows a flow diagram of a method in accordance to an embodiment of the invention.
Figure 3 shows a block diagram of successive process transport blocks on a downlink channel and positive or negative acknowledgements on an uplink channel.
Figure 4 shows a flow diagram of a further method in accordance to an example.
Figure 5 shows a flow diagram of an even further method in accordance to an even further embodiment of the invention.
Figure 6 shows two block diagrams for multiplexing parity information and control information to the combination.
Figure 7 shows a block diagram of control signalling bits on a control channel and a further block diagram of inband signalling bits.
Figure 8 shows two block diagrams of a base station and a relay station according to the embodiments of the invention.
Figure 9 shows a block diagram of a mobile station according to the embodiments of the invention.

### DESCRIPTION OF THE EMBODIMENTS

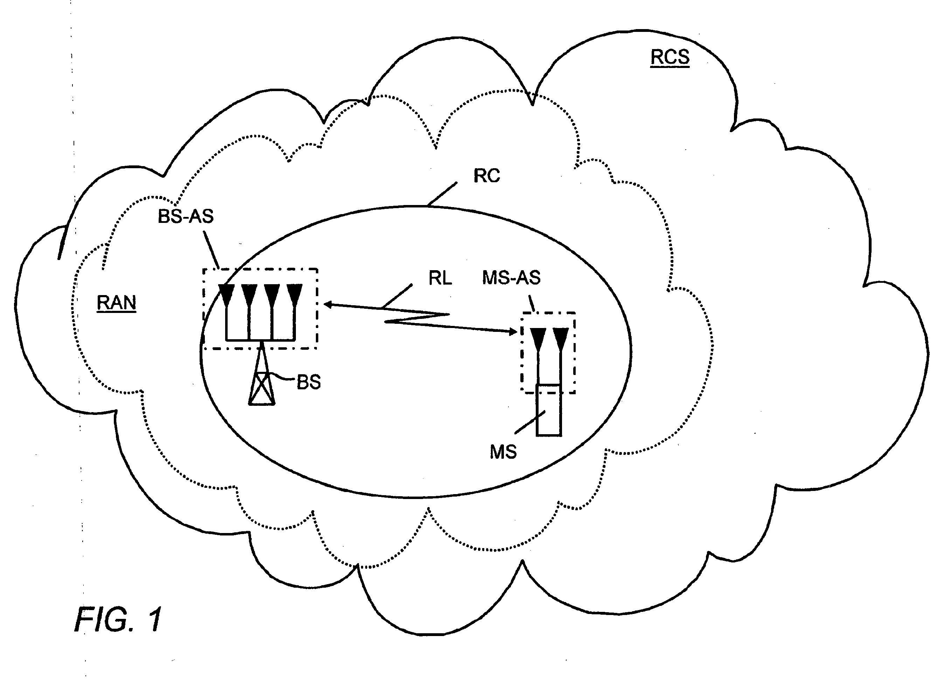

Figure 1 shows a radio communication system RCS comprising a radio access network RAN. The core network of the radio communication system RCS and connections of the radio communication system RCS to further radio communication systems, to the Internet or to fixed line communications systems are not shown for simplification.

The radio communication system RCS may be for example a 3GPP LTE radio communication network using OFDM (OFDM = Orthogonal Frequency Division Multiplexing). In further alternatives, the radio communication system RCS may for example a 3GPP UMTS/HSPA radio communication network (UMTS = Universal Mobile Telecommunication Systems, HSPA = High Speed Packet Access), a WiMAX radio communication network (WiMAX = Worldwide Interoperability for Microwave Access) based for example on the IEEE 802.16d standard (IEEE = Institute of Electrical and Electronics Engineers), or a WLAN (WLAN) based for example on the IEEE 802.11 g standard. The radio access network RAN comprises a base station BS. The base station BS is responsible for a radio cell RC (the term "radio sector" can be used in an equivalent way for the term "radio cell"). Further base stations, connections between the base stations, connections between the base stations and network nodes of the core network and further radio cells of the radio access network RAN are not shown for simplification.

In an alternative, the radio access network RAN may comprise one or several base stations and one or several relay stations for relaying radio signals between one of the base stations and one or several mobile stations.

The base station BS comprises an antenna system BS-AS with four antenna elements for example for a wireless coverage area of the radio cell RC. Alternatively, the base station BS may comprise two or more antenna systems for a wireless coverage of two or more radio cells or the antenna system BS-AS may comprise less than four or more than four antenna elements.

A mobile station MS is located within the wireless coverage area of the radio cell RC and may comprise an antenna system MS-AS with two antenna elements. Alternatively, the antenna system MS-AS may comprise one antenna element or more than two antenna elements.

The mobile station MS may be for example a cellular telephone, a portable computer, a pocket computer, a hand-held computer, a personal digital assistant or a car-mounted mobile device.

The base station BS communicates with the mobile station MS via a radio link RL. Alternatively, the base station BS communicates with a relay station via a first radio link and the relay station communicates with the mobile station MS via a second radio link. In a further alternative, the base station BS communicates with a relay station via a first radio link and the relay station communicates with the mobile station MS via a second radio link and additional the base station BS communicates with the mobile station MS via the radio link RL.

The base station BS and the mobile station MS may use on a downlink from the base station BS to the mobile station MS an ARQ scheme or a HARQ scheme and/or may use on an uplink from the mobile station MS to the base station BS a further ARQ scheme or a further HARQ scheme. The HARQ scheme and/or the further HARQ may be combined with soft combining. The HARQ scheme and/or the further HARQ may be synchronous or asynchronous. Likewise, the ARQ scheme and/or the further ARQ scheme may be synchronous or asynchronous.

The base station BS, when receiving on the uplink a negative acknowledgement from the mobile station MS or from the relay station for first downlink user data, which have been transmitted from the base station BS to the mobile station MS or the relay station and which could not be recovered error free, may perform a single retransmission of second downlink user data comprising parity information of the first downlink user data or the base station BS may determine a downlink combination of the second downlink user data and of one or several third downlink user data by multiplexing the second downlink user data and the one or several third downlink user data and the base station BS may transmit via the radio link RL the downlink combination to the mobile station MS or the relay station. Control parameters for the downlink combination such as information about a downlink resource block assignment, downlink modulation schemes of the second downlink user data and of the one or several third downlink user data, downlink coding schemes of the second downlink user data and of the one or several third downlink user data or downlink redundancy versions of the second downlink user data and of the one or several third downlink user data may be signaled on a downlink control channel or may be partly multiplexed to the downlink combination. In further alternatives, some of the control parameters for the downlink combination may be partly predefined or implicitly defined.

Likewise, the mobile station MS, when receiving on the downlink a negative acknowledgement from the base station BS or from the relay station for first uplink user data, which have been transmitted from the mobile station MS to the base station BS or the relay station and which cannot be recovered error free, may perform a single retransmission of second uplink user data comprising parity information of the first uplink user data or the mobile station MS may determine an uplink combination of the second uplink user data and of one or several third uplink user data by multiplexing the second uplink user data and the one or several third uplink user data and the mobile station MS may transmit via the radio link RL the uplink combination to the base station BS or the relay station.

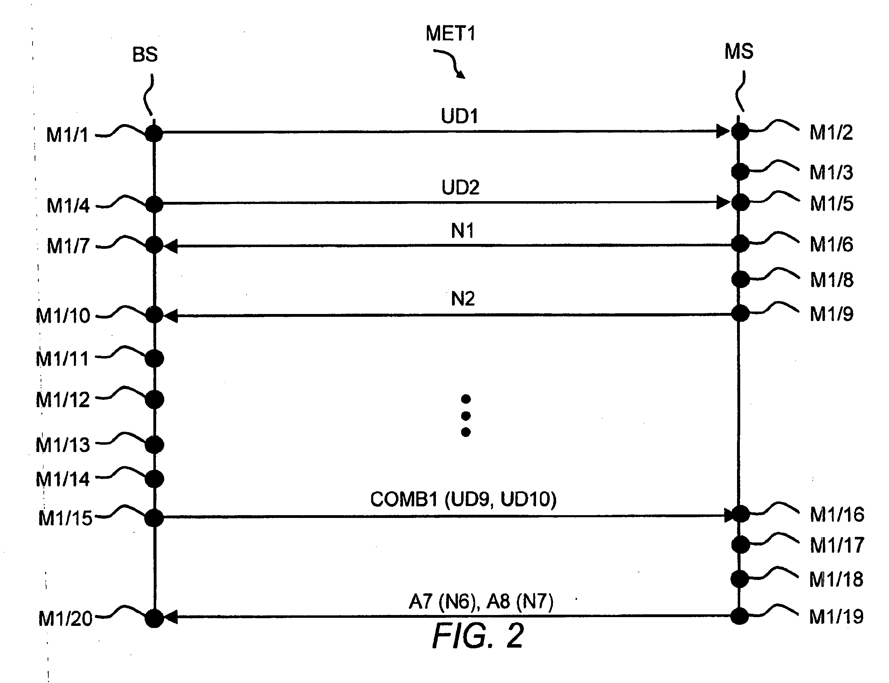

The base station BS may transmit to the mobile station MS an indication, whether to perform an uplink retransmission with the uplink combination. Control parameters for the uplink combination such as information about an uplink resource block assignment, uplink modulation schemes of the second uplink user data and of the one or several third uplink user data, uplink coding schemes of the second uplink user data and of the one or several third uplink user data or uplink redundancy versions of the second uplink user data and of the one or several third uplink user data may be signaled on an uplink control channel or may be partly multiplexed to the uplink combination. In further alternatives, some of the control parameters for the uplink combination may be partly predefined or implicitly defined. Referring to Figure 2 a flow diagram of a method MET1 in accordance to a first embodiment of the invention is shown. The number of the steps for performing the method MET1 is not critical, and as can be understood by those skilled in the art, that the number of the steps and the order of the steps may vary without departing from the scope of the invention. The method MET1 is shown with respect to a downlink transmission of downlink user data from the base station BS to the mobile station MS. If a relay station is used between the base station BS and the mobile station MS, a similar downlink method may be performed between the base station BS and the relay station and/or between the relay station and the mobile station MS.

As can be understood by those skilled in the art, a similar method may be performed for an uplink transmission of uplink user data from the mobile station MS to the base station BS. If a relay station is used between the mobile station MS and the base station BS, a similar uplink method may be performed between the mobile station BS and the relay station and/or between the relay station and the base station BS.

In a first step M1/1, the base station BS transmits modulated and coded first user data UD1 for example in a first HARQ process in an initial transmission for example via the PDSCH (PDSCH = physical downlink shared channel) used in LTE to the mobile station MS. The first user data UD1 preferably comprise first information bits for a mobile service running on the mobile station MS and first parity bits of first parity information deduced from the first information bits.

The first user data UD1 are transmitted in one or several physical resource blocks such as used for example in LTE with a frequency range of 180 kHz with 12 consecutive OFDM subcarriers and a time duration of one subframe, which is 1 ms in the case of LTE.

In a next step M1/2, the mobile station MS receives the modulated and coded first user data UD1.

In a further step M1/3, the mobile station MS demodulates and decodes the first user data UD1 and performs a first CRC using the first parity information for determining any first transmission errors of the first user data UD1 and preferably, the mobile station MS may store the modulated and coded first user data UD1 or alternatively may store the demodulated first user data UD1.

In a next step M1/4, the base station BS may transmit modulated and coded second user data UD2 for example in a second HARQ process in an initial transmission for example via the PDSCH to the mobile station MS.

The second user data UD2 preferably comprise second information bits for the mobile service or a different mobile service running on the mobile station MS and second parity bits of second parity information deduced from the second information bits.

The second user data UD2 are transmitted in one or several physical resource blocks.

In a further step M1/5, the mobile station MS receives the modulated and coded second user data UD2.

In a next step M1/6, the mobile station MS transmits a first negative acknowledgement N1 to the base station BS, if the mobile station MS cannot recover error free the first user data UD1.

In a further step M1/7, the base station BS receives the first negative acknowledgement N 1.

In a next step M1/8, the mobile station MS demodulates and decodes the second user data UD2 and performs a second CRC using the second parity information for determining any transmission errors of the second user data UD2 and preferably, the mobile station MS stores the modulated and coded second user data UD2 or the demodulated second user data UD2 in a similar way as in step M1/3 for the first user data UD1.

In a further step M1/9, the mobile station MS transmits a second negative acknowledgement N2 to the base station BS, if the mobile station MS cannot recover error free the second user data UD2.

The first and the second negative acknowledgement N1, N2 may comprise in addition an indicator of a quality of reception at the mobile station MS such as a signal to noise and interference ratio or soft reliability information of the decoder of the mobile station MS. The indicator of the quality of reception may indicate how much redundancy is still required at the mobile station MS for recovering the first user data UD1 and the second user data UD2 error free. The base station BS may use the indicator of the quality of reception to determine an amount of further first parity information and further second parity information required for the mobile station MS to recover the first user data UD1 and the second user data UD2 by soft combining.

In a next step M1/10, the base station BS receives the second negative acknowledgement N2.

In a further step M1/11, the base station BS determines the further first parity information for the first user data UD1 as ninth user data UD9 for the first HARQ process and determines further second parity information for the second user data UD2 as tenth user data UD10 for the second HARQ process.

In further alternatives, the ninth user data UD9 may comprise a part of the first information bits of the first user data UD1 or a full set of the first information bits of the first user data UD1 and the further first parity information and/or the tenth user data UD10 may comprise a part of the second information bits of the second user data UD2 or a full set of the second information bits of the second user data UD2 and the further second parity information.

If no first and second information bits or only the part of the first and second information bits are used in a retransmission of the combination of the ninth and tenth user data UD9, UD10, the retransmission is non self-decodable and a soft combining and a storage of the initial transmissions is required at the mobile station MS but a code rate for the retransmission can be increased.

If the full sets of the first and the second information bits are used in the combined retransmission, the combined retransmission would be self-decodable without requiring soft combining at the mobile station MS.

In a next step M1/12, the base station BS determines a combination COMB1 of the ninth user data UD9 and the tenth user data UD10 by multiplexing the ninth user data UD9 and the tenth user data UD10. Control information of the ninth user data UD9 and the tenth user data UD10 is required at the mobile station MS for being able to identify, to decode, to demodulate, to descramble and to deinterleave the ninth user data UD9 and the tenth user data UD10. An indication of the ninth user data UD9 depending on the first user data UD1 and an indication of the tenth user data UD10 depending on the second user data UD2 may be implicitly provided to the mobile station MS, if the method MET1 may be based for example on one or several synchronous HARQ processes. The control information of the ninth user data UD9 and the tenth user data UD10 of one or several physical layer processing parameters, which may be changed between successive HARQ processes, such as a modulation scheme to be applied at the base station BS and/or a coding scheme to be applied at the base station BS may be signalled by indications on a control channel such as an LTE downlink control channel.

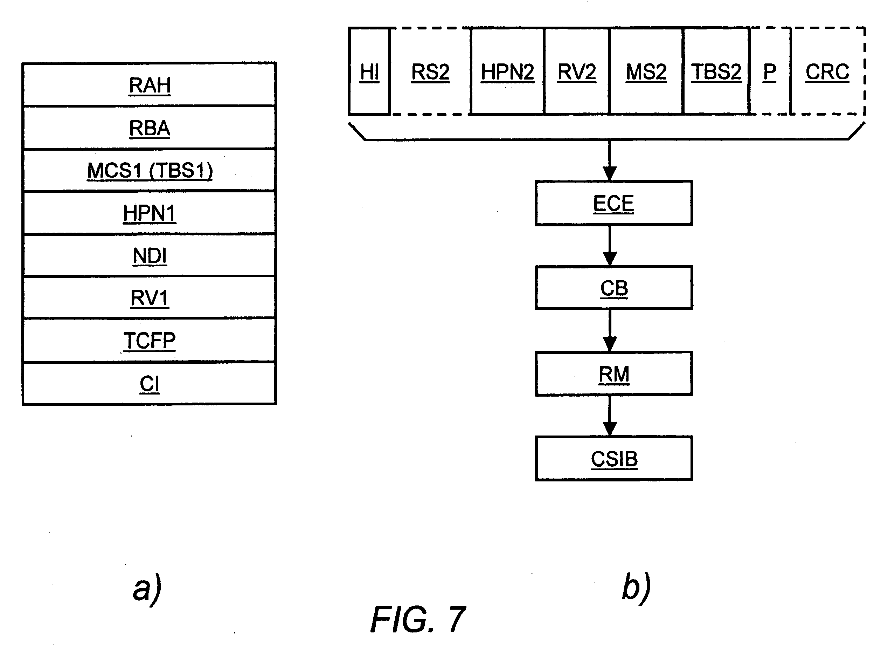

In an alternative, the control information of the ninth user data UD9 may be signalled on the control channel and the control information of the tenth user data UD10 may be multiplexed to the combination COMB1 of the ninth user data UD9 and the tenth user data UD10 (see Fig. 7 a) and b)). Preferably, further control information of the ninth user data UD9 and the tenth user data UD10 of further physical layer processing parameters, which may be not often changed between successive HARQ processes, such as an indication of a scrambling scheme to be applied at the base station BS for the tenth user data UD10 and/or an indication of an interleaving scheme to be applied at the base station BS for the tenth user data UD10 may be predefined at the base station BS and at the mobile station MS or may be implicitly defined for example by applying for the tenth user data UD10 a same scrambling scheme and/or a same interleaving scheme as being applied for the ninth user data UD9. In an alternative, the scrambling and/or interleaving scheme may be signalled on the control channel.

The base station BS may determine the combination COMB by multiplexing the user data of one or several process transport blocks such as used in 3GPP LTE.

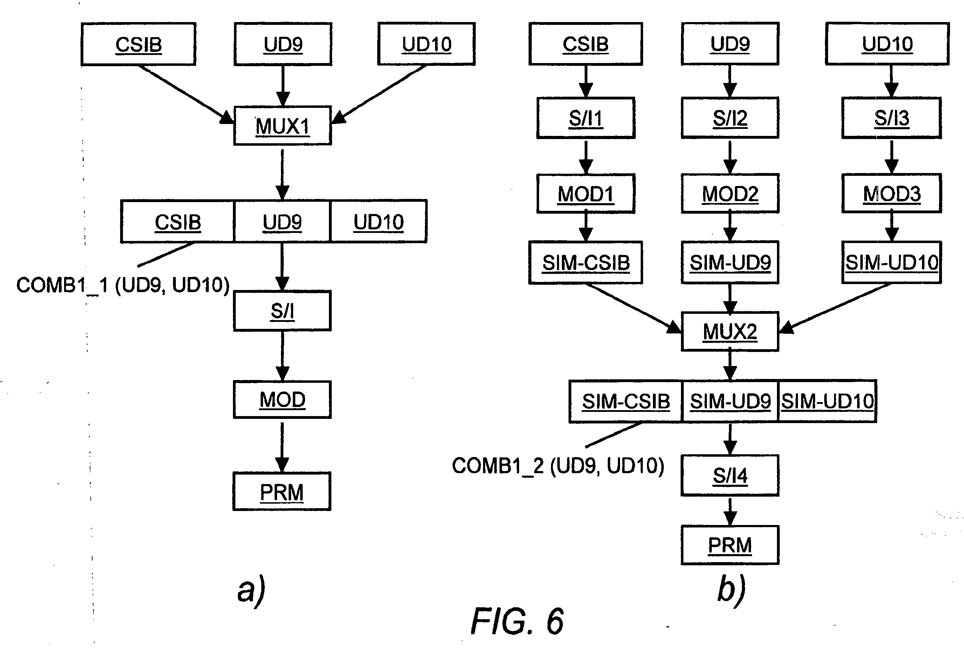

In a further step M1/13, the base station BS may scramble the combination COMB1 of the user data with the scrambling scheme, may interleave the scrambled combination COMB1 with the interleaving scheme and may modulate the scrambled and interleaved combination COMB1 with the modulation scheme (see Fig. 6 a)). The modulation and coding scheme may be adapted to a quality of service class of the ninth and tenth user data UD9, UD10 such as a background service class or an interactive service class. The background service class may comprise services such as web browsing, file transfer, video download and the interactive service class may comprise services such as gaming, video conference or voice over IP.

In a next step M1/14, the base station BS performs a physical resource mapping of the modulated, scrambled and interleaved combination COMB1 to one or several physical resource blocks (see also Fig. 6 a)).

In an alternative, the base station BS may swap partly an order of the steps M1/12 and M1/13 and the base station BS may multiplex the ninth user data UD9 and the tenth user data UD10 after the modulation (see also Fig. 6 b)). This allows modulating the ninth user data UD9 and the tenth user data UD10 with a same modulation scheme or with different modulation schemes.

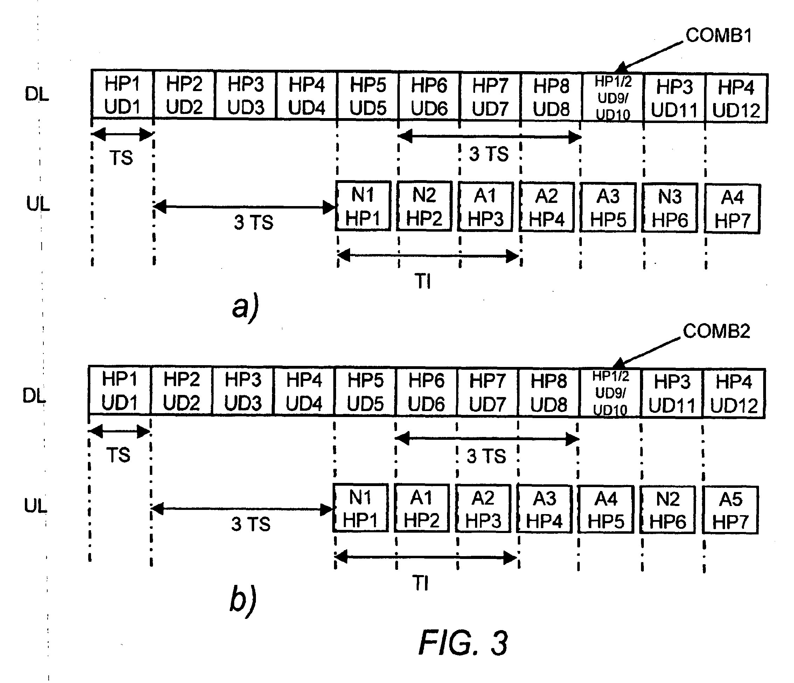

Figure 3 a) shows schematically a transmission of user data within successive process transport blocks (indicated by rectangles) using 8 HARQ processes HP1 - HP8 such as used in 3GPP LTE or 3GPP HSDPA on the downlink DL and a transmission of positive and negative acknowledgements N1, N2, A1, A2, A3, N3, A4 on the uplink UL for the 8 HARQ processes HP1 - HP8.

The process transport blocks each having a length of one time slot TS (length of one subframe in 3GPP LTE) comprise user data UD1 to UD12, which are transmitted from the base station BS to the mobile station MS. The mobile station MS receiving the process transport blocks, checks for transmission errors and transmits the positive or negative acknowledgements N1, N2, A1, A2, A3, N3, A4 for example 3 time slots TS after receiving the process transport blocks. In a same way, the base station BS may perform a retransmission for the negative acknowledgements N1, N2, N3 for example in a range of three to five time slots TS after receiving the negative acknowledgements N1, N2, N3 (in 3GPP LTE a retransmission is performed at least 4 subframes after receiving a negative acknowledgement, if an asynchronous HARQ process is used). If the base station BS receives the first negative acknowledge N1 for the first user data UD1, a time interval TI of a length of for example three time slots TS may start. The time interval TI may be configured at the base station BS for example by an O&M network node (O&M = Operation and Maintenance) and may depend on a quality of service class of the user data UD1 to UD11.

If within the time interval TI the base station BS may receive a second successive negative acknowledgement N2 for the second user data UD2, the base station BS may be configured to switch from a single retransmission of parity information for one of the first and second user data UD1, UD2 to a retransmission of the combination COMB1 of parity information of the first and second user data UD1, UD2. If no second negative acknowledgement will be received within the time interval TI, the base station BS may perform the single retransmission for the first user data UD1 in order to fulfil constraints to overall transmission time delays for example.

The combination COMB1 of the ninth user data UD9 depending on the first user data UD1 for the first HARQ process HP1 and the user data UD10 depending on the second user data UD2 for the second HARQ process HP2, is included in one process transport block with the time length one time slot TS (e.g. one subframe such as used in 3GPP LTE). This can be done, because the ninth and tenth user data UD9, UD10 may not comprise full information bits of the first and second user data UD1, UD2 and may comprise for example only parity information of the first and second user data UD1, UD2. It is also possible, that a radio communication standard will allow to expand a process transport block across two or more time slots TS. In such a case, the combination COMB1 may comprise full information bits of the first and second user data UD1, UD2 with different parity information then used in the initial transmissions.

If the initial transmissions of the first and second user data UD1, UD2 may be performed for example with a half bandwidth of a system bandwidth (e.g. half bandwidth of 10 MHz system bandwidth or of 20 MHz system bandwidth in case of 3GPP LTE; the system bandwidth is the bandwidth specifically dedicated for example by a regulation authority to a mobile operator), the combination COMB1 may comprise full information bits of the first and second user data UD1, UD2 with different parity information then used in the initial transmissions.

The mobile station MS also knowing the time interval TI can itself determine based on a time scale of the transmitted positive or negative acknowledgements N1, N2, A1, A2, A3, N3, A4, when it can expect a new initial transmission of user data, a retransmission of user data as a single retransmission or a retransmission of user data as a combined retransmission due to the time constraints of the synchronous HARQ process. In such case, no explicit indication indicating an initial transmission of a new set of user data, indicating a single retransmission of user data for one specific previously transmitted set of user data or inidicating a combined retransmission of user data for two specific previously transmitted sets of user data may be required and signalled from the base station BS to the mobile station MS.

In parallel with the steps M1/11 to M1/14, the base station BS transmits modulated and coded third, fourth, fifth, sixth, seventh and eight user data UD3, UD4, UD5, UD6, UD7, UD8 in third, fourth, fifth, sixth, seventh using eighth HARQ processes HP3 to HP8 each in an initial transmission to the mobile station MS (not shown in Figure 2 but shown in Figure 3 a).

In a next step M1/15, the base station BS transmits the modulated, scrambled and interleaved data of the combination COMB1 via one or several physical resource blocks of the radio link RL for example via the PDSCH to the mobile station MS.

The base station BS may apply the determination of the combination COMB1 and a transmission of the combination COMB1 for example only, if the user data UD9, UD10 of the combination COMB1 do not belong to a delay sensitive quality of service class. The combination COMB1 may be for example preferably applied if both user data UD9, UD10 belong to one background service or to different background sevices.

In a further step M1/16, the mobile station MS receives the modulated, scrambled and interleaved data of the combination COMB1.

In a next step M1/17, the mobile station MS determines a location of the ninth user data UD9 and a location of the tenth user data UD10 within the one or several physical resource blocks of the combination COMB1.

According to one example, the base station BS may transmit information of the location of the ninth user data UD9 and of the location of the tenth user data UD10 with the one or several physical resource blocks to the mobile station MS by including the information of the location of the ninth user data UD9 and of the location of the tenth user data UD10 in a dedicated information field of a control signalling message such as a downlink scheduling grant used in 3GPP LTE/HSDPA, which may be a small packet on a downlink control channel (not shown in Figure 2 but in Figure 7 a): resource block assignment RBA). According to another example, the base station BS may transmit information of the location of the ninth user data UD9 and of the location of the tenth user data UD10 to the mobile station MS by multiplexing the information of the location of the ninth user data UD9 and of the location of the tenth user data UD10 to the combination of ninth user data UD9 and the tenth user data UD10 (see Figure 6 a), b) and Figure 7 b)).

According to a further example, an equalization of a radio resource size for the ninth user data UD9 and the tenth user data UD10 and a multiplexing scheme how to multiplex the ninth user data UD9 and the tenth user data UD10 to the combination COMB1 may be predefined at the base station BS and at the mobile station MS. In such a case, no information of the location of the ninth user data UD9 and of the location of the tenth user data UD10 must be transmitted to the mobile station MS.

The radio resource size may be given for example by (Nrb-Nctrl)/2, where Nrb denotes a number of physical resource blocks assigned for the transmission of the combination COMB1 and Nctrl denotes a predefined or semi-statically defined number of physical resource blocks allocated for a sequence of control signalling bits as multiplexed to the combination COMB1 (see also Figure 7 b)). The number of physical resource blocks can be an integer or a rational number as a quotient of two integers such as ¼ or ½.

According to the invention, an adaptation of the radio resource size for the ninth user data UD9 and the tenth user data UD10 may be performed at the base station BS by using a functional relationship between a size of a physical resource assigned for the first transmission of the first user data UD1 and a size of a physical resource assigned for the first transmission of the second user data UD2.

The functional relationship may be for example linear division such as Nrb-TBS_UD1/(TBS_UD1 +TBS_UD2) for the ninth user data UD9 and Nrb-TBS UD2/(TBS_UD1 +TBS_UD2) for the tenth user data UD10, where TBS_UD1 denotes a first physical resource size used for the first user data UD1 and TBS_UD2 denotes a second physical resource size used for the second user data UD2.

In further alternatives, similar functional relationships may be used.

In a further step M1/18, the mobile station MS demodulates, descrambles and de-interleaves the data of the combination COMB1 and may perform a soft combining of the ninth user data UD9 with the first user data UD1 and may perform a soft combining of the tenth user data UD10 with the second user data UD2 for recovering the first user data UD1 and the second user data UD2 error free after decoding. Alternatively, the soft combining is not required, if the ninth user data UD9 comprise the full information bits of the first user data UD1 and the tenth user data UD10 comprise the full information bits of the second user data UD2.

If the first user data UD1 and/or the second user data UD2 cannot be recovered error free by using the received combination COMB1 and corresponding negative acknowledgements are transmitted from the mobile station MS to the base station BS, a transmission of even further first parity information of the first user data UD1 and/or even further second parity information of the second user data UD2 may be performed by using a further combination of multiplexed data or by using single retransmissions comprising the further first parity information of the first user data UD1 or the even further second parity information of the second user data UD2.

In a next step M1/19, the mobile station MS may transmit for the received combination COMB1 of the ninth user data UD9 and the tenth user data UD10 separate positive or negative acknowledgements A7, A8, N6, N7, if only one of the first and the second user data UD1, UD2 could be recovered error free (possible combinations of transmitted positive and/or negative acknowledgements: A7 and A8, N6 and N7, A7 and N7, N6 and A8), or the mobile station MS may transmit for the received combination COMB1 one single positive or negative acknowledgement, if both the first and the second user data UD1, UD2 could or could not be recovered error free.

The negative acknowledgement for a reception of the combination COMB1 may further comprise an indicator indicating a quality of reception at the mobile station MS such as a signal to noise and interference ratio or soft reliability information of the decoder of the mobile station MS. The indicator may be used at the base station BS for adapting algorithms at the base station BS optimizing physical layer parameters (see Figure 7 and corresponding description) for further initial transmissions and further retransmissions with or without using the combination COMB1.

In case of LTE, radio resources for multiple positive or negative acknowledgements may preferably be implicitly allocated by tagging the multiple positive or negative acknowledgements to a control channel element used for a downlink scheduling grant such as proposed in 3GPP LTE (see for example 3GPP TS36.213 Chapter 10.1).

In a further step M1/20, the base station BS receives the separate positive or negative acknowledgements A7, A8, N6, N7 or the combined positive or negative acknowledgement.

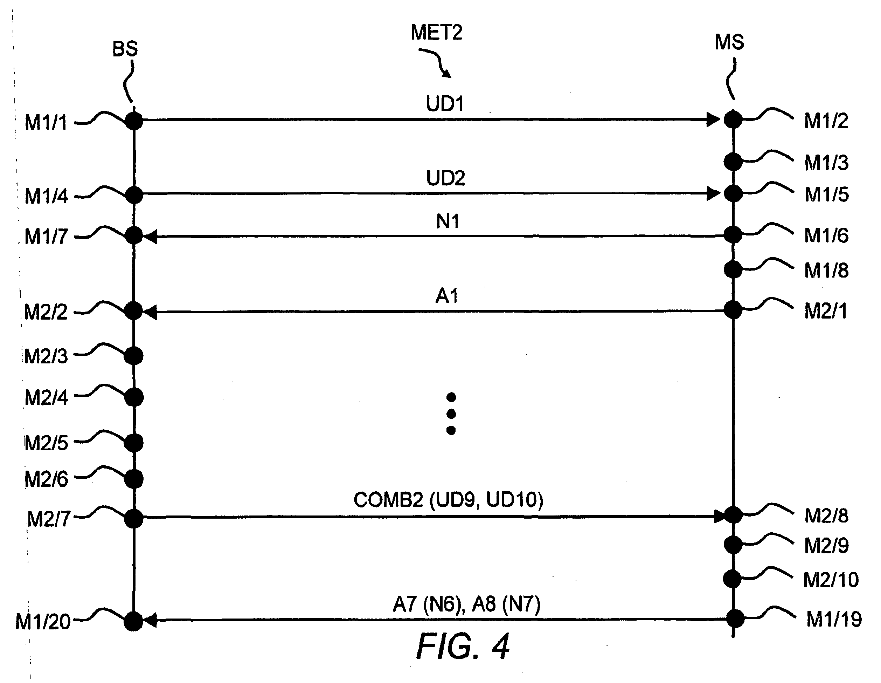

Referring to Figure 4 a flow diagram of a method MET2 in accordance to an example is shown. In addition to the steps M1/1 to M1/8, M1/19, M1/20 performed within the first embodiment of the invention, the method MET further comprises the steps M2/1 to M2/10. The number of the steps for performing the method MET2 is not critical, and as can be understood by those skilled in the art, that the number of the steps and the order of the steps may vary. The method MET2 is shown with respect to a downlink transmission of downlink user data from the base station BS to the mobile station MS. If a relay station is used between the base station BS and the mobile station MS, a similar downlink method may be performed between the base station BS and the relay station and/or between the relay station and the mobile station MS.

As can be understood by those skilled in the art, a similar method may be performed for an uplink transmission of uplink user data from the mobile station MS to the base station BS. If a relay station is used between the mobile station MS and the base station BS, a similar uplink method may be performed between the mobile station BS and the relay station and/or between the relay station and the base station BS.

In the further step M2/1, the mobile station MS transmits a first positive acknowledgement A1 to the base station BS, if the mobile station MS recovers error free the second user data UD2.

In the next step M2/2, the base station BS receives the first positive acknowledgement A1.

In the further step M2/3, the base station BS determines that the base station BS has not received within the time interval T1 a further successive negative acknowledgement N2 for the second user data UD2 (see Fig. 3 b)). The difference between the Figure 3 b) and the Figure 3 a) is that the mobile station MS can recover error free the second user data UD2 in

Figure 3 b) and therefore transmits a positive acknowledgement A1 to the base station BS. Accordingly, the successive positive and negative acknowledgements A1, A2, A3, N3, A4 of Figure 3 a) have been changed to successive positive and negative acknowledgements A2, A3, A4, N2, A5. Therefore, the base station BS determines at the further step M2/1 the further first parity information for the first user data UD1 as ninth user data UD9 and determines tenth user data UD10 from a data queue as new data with information bits, which have been not transmitted before.

In the next step M2/4, the base station BS determines similar to the step M1/12 a combination COMB2 of the ninth user data UD9 and the tenth user data UD10 by multiplexing the ninth user data UD9 and the tenth user data UD10.

In an alternative, the base station BS may determine a combination COMB2 of the ninth user data UD9, the tenth user data UD10 and control information of the ninth user data UD9 and/or the tenth user data UD10 by multiplexing the ninth user data UD9, the tenth user data UD10 and the control information (see Figure 6).

In a further alternative, the base station BS may determine a combination COMB2 of the ninth user data UD9, the tenth user data UD10 and further user data by multiplexing the ninth user data UD9, the tenth user data UD10 and the further user data.

In an even further alternative, the base station BS may determine a combination COMB2 of the ninth user data UD9, the tenth user data UD10, the further user data and control information of the ninth user data UD9, the tenth user data UD10 and the further user data by multiplexing the ninth user data UD9, the tenth user data UD10 the further user data and the control information.

In the further step M2/5, the base station BS may scramble the combination COMB2 of the user data with the scrambling scheme, may interleave the scrambled combination COMB2 with the interleaving scheme and may modulate the scrambled and interleaved combination COMB2 with the modulation scheme with similar alternatives as given according to the step M1/13 (see Figure 6).

In the next step M2/6, the base station BS performs a physical resource mapping of the modulated, scrambled and interleaved combination COMB2 with similar alternatives as given according to the step M1/14 (see also Figure 6).

In parallel with the steps M2/3 to M2/6, the base station BS and the mobile station MS may perform for example additional six first transmissions for the user data UD3 to UD8 from the base station BS to the mobile station MS and corresponding transmissions of positive or negative acknowledgements from the mobile station MS to the base station BS indicated by three dots (see also Fig. 3 b))

In the further step M2/7, the base station BS transmits the modulated, scrambled and interleaved data of the combination COMB2 via one or several physical resource blocks of the radio link RL to the mobile station MS similar to the step M1 /15.

The base station BS may apply the determination of the combination COMB2 and a transmission of the combination COMB2, if the user data UD1, UD10 belong to a specific quality of service class such as given above. The combination COMB2 may be applied for example preferably, if the user data UD1 to UD12 may belong for example to interactive or background services.

In the next step M2/8, the mobile station MS receives the modulated, scrambled and interleaved data of the combination COMB1 similar to the step M1/16.

In the further step M2/9, the mobile station MS determines a location of the ninth user data UD9 and a location of the tenth user data UD10 within the one or several physical resource blocks of the combination COMB2 with similar alternatives as given according to the step M1/17.

In the next step M2/1 0, the mobile station MS demodulates and de-interleaves the data of the combination COMB2, de-multiplexes the ninth user data UD9 and the tenth user data UD10 and may perform a soft combining of the de-multiplexed ninth user data UD9 with the demodulated first user data UD1 for recovering after decoding the first user data UD1 error free and tries to decode the tenth user data UD10 error free.

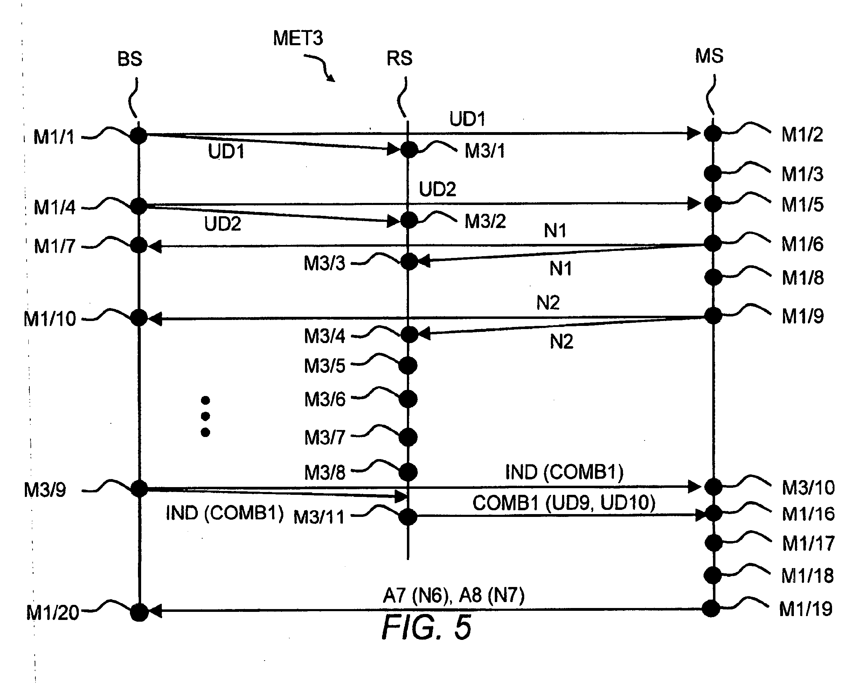

Referring to Figure 5 a flow diagram of a method MET3 in accordance to a second embodiment of the invention is shown. In addition to the steps M1/1 to M1/10, M1/16 to M1 /20 performed within the first embodiment of the invention, the method MET3 further comprises the steps M3/1 to M3/11. The number of the steps for performing the method MET3 is not critical, and as can be understood by those skilled in the art, that the number of the steps and the order of the steps may vary without departing from the scope of the invention. The method MET3 is shown with respect to a downlink transmission of downlink user data from the base station BS to the mobile station MS. If a relay station is used between the base station BS and the mobile station MS, a similar downlink method may be performed between the base station BS and the relay station and/or between the relay station and the mobile station MS.

As can be understood by those skilled in the art, a similar method may be performed for an uplink transmission of uplink user data from the mobile station MS to the base station BS. If a relay station is used between the mobile station MS and the base station BS, a similar uplink method may be performed between the mobile station BS and the relay station and/or between the relay station and the base station BS.

The relay station RS may be for example a type 2 relay such as proposed for 3GPP LTE.

In the further step M3/1, the relay station RS also receives the modulated and coded first user data UD1, demodulates and decodes the first user data UD1, performs a first CRC using the first parity information for determining any first transmission errors of the first user data UD1 and stores the error free demodulated and decoded first user data UD1. There is a much higher possibility, that the relay station RS can error free demodulate and decode the first user data UD1, because the relay station RS may be located closer to the base station BS than the mobile station MS or the base station BS may use an exclusive radio link to the relay station RS using directive antennas.

In the further step M3/2, the relay station RS also receives the modulated and coded second user data UD2, demodulates and decodes the second user data UD2, performs a second CRC using the second parity information for determining any first transmission errors of the second user data UD2 and stores the error free demodulated and decoded second user data UD2. In the further step M3/3, the relay station RS also receives the first negative acknowledgement N1 for example by overhearing.

In the further step M3/4, the relay station RS also receives the second negative acknowledgement N2 for example by overhearing.

Alternatively, the base station BS receives the first and second negative acknowledgement N1, N2 and forwards the first and second negative acknowledgement N 1, N2 to the relay station RS.

In the further step M3/5, the relay station RS may determine that the relay station RS has received within the time interval TI a further successive negative acknowledgement N2 for further user data UD2 (see Fig. 3 a)).

In the further step M3/6, the relay station RS determines similar to the step M1/12 the combination COMB1 of the ninth user data UD9 and the tenth user data UD10 by multiplexing the ninth user data UD9 and the tenth user data UD10 with similar alternatives as given according to the step M1/12. In an alternative, the base station BS may determine similar to the step M1/12 the combination COMB1 of the ninth user data UD9 and the tenth user data UD10 by multiplexing the ninth user data UD9 and the tenth user data UD10 with similar alternatives as given according to the step M1/12 and may forward the combination COMB1 to the relay station RS.

In the further step M3/6, the relay station RS may scramble the combination COMB1 of the user data with the scrambling scheme, may interleave the scrambled combination COMB1 with the interleaving scheme and may modulate the scrambled and interleaved combination COMB1 with the modulation scheme with similar alternatives as given according to the step M1/13 (see Figure 6).

In an alternative, the base station BS may in addition scramble the combination COMB1 of the user data with the scrambling scheme, may interleave the scrambled combination COMB1 with the interleaving scheme and may modulate the scrambled and interleaved combination COMB1 with the modulation scheme with similar alternatives as given according to the step M1/13 and may forward the combination COM81 to the relay station RS.

In the further step M3/7, the relay station RS performs a physical resource mapping of the modulated, scrambled and interleaved combination COMB1 to one or several third process transport blocks with similar alternatives as given according to the step M1/14 (see also Figure 6).

In parallel with the steps M3/5 to M3/8, the base station BS and the mobile station MS may perform for example additional six first transmissions for the user data UD3 to UD8 from the base station BS to the mobile station MS and corresponding transmissions of positive or negative acknowledgements from the mobile station MS to the base station BS indicated by three dots, wherein the relay station RS for example overhears the downlink and the uplink traffic between the base station BS and the mobile station MS (see also Fig. 3 b)).

In the further step M3/9, the base station BS transmits an indication IND for the transmission of the combination COMB1 to the mobile station MS1 indicating that a combined transmission can be expected and preferably a point in time, when the combined transmission will be transmitted. The relay station RS may overhear the indication IND for the transmission of the combination COMB1 to know the time, when to transmit the combination COMB1.

In an alternative, the base station BS may transmit a specific indication to the relay station RS, when to transmit the combination COMB1.

In a further alternative, no indication IND to the mobile station MS and no specific indication to the relay station RS may be required and there may be an implicit timing, if for example a synchronous HARQ process is being applied.

In the further step M3/10, the mobile station MS receives the indication IND.

In the further step M3/11, the relay station RS transmits the combination COMB1 to the mobile station MS1.

Referring to Figure 6 a) a block diagram for multiplexing parity information and control information and for performing physical layer processing according to a preferred embodiment of the invention is shown.

The control information CSIB of the ninth user data UD9 and/or the tenth user data UD1 0, the ninth user data UD9 and the tenth user data UD10 may be multiplexed with a multiplexing step MUX1 to a combination COMB1_1 for example using a memory area or a data queue by putting the control information CSIB at first place of the memory area or at a beginning section of a data queue, by putting the ninth user data UD9 at second place of the memory area or at a middle section of the data queue and by putting the tenth user data UD10 at third place of the memory area or at an end section of the data queue.

In an alternative for example, the ninth user data UD9 may be put at the first place of the memory area or at the beginning section of a data queue, the control information CSIB may be put at the second place of the memory area or at the middle section of the data queue, and the tenth user data UD10 may be put at the third place of the memory area or at the end section of the data queue during the multiplexing step MUX1.

In further alternatives, the combination COMB1_1 may be generated by multiplexing the ninth user data UD9 and the tenth user data UD10 without the control information CSIB, by multiplexing the ninth user data UD9, the tenth user data UD10 and further user data, or by multiplexing the ninth user data UD9, the tenth user data UD10, the further user data and control information of the ninth user data UD9, the tenth user data UD10 and the further user data.

In even further alternatives, the ninth user data UD9 may be split into several parts and the tenth user data UD10 may be split into several further parts and several parts and the several further parts may be multiplexed like in a zip merge.

In following scrambling and interleaving step S/1, modulation step MOD and physical resource mapping step PRM performed at the base station BS the combination COMB1_1 is prepared for transmission to the mobile station MS.

Referring to Figure 6 b) a block diagram for multiplexing parity information and control information and for performing physical layer processing according to a further preferred embodiment of the invention is shown. The control information CSIB of the ninth user data UD9 and/or the tenth user data UD10 may be optionally scrambled and interleaved with a first scrambling and interleaving step S/I1 and may be modulated with a first modulation step MOD1 to get scrambled, interleaved and modulated control information SIM-CSIB.

The ninth user data UD9 may be optionally scrambled and interleaved with a second scrambling and interleaving step S/12 and may be modulated with a second modulation step MOD2 to get scrambled, interleaved and modulated ninth user data UD9.

The tenth user data UD10 may be optionally scrambled and interleaved with a third scrambling and interleaving step S/13 and may be modulated with a third modulation step MOD3 to get scrambled, interleaved and modulated tenth user data UD10.

Then, the scrambled, interleaved and modulated control information SIM-CSIB, the scrambled, interleaved and modulated ninth user data UD9 and the scrambled, interleaved and modulated tenth user data UD10 may be multiplexed with a multiplexing step MUX2 to a combination COMB1_2 for example using a memory area or a data queue by putting the scrambled, interleaved and modulated control information SIM-CSIB at first place of the memory area or at a beginning section of a data queue, by putting the scrambled, interleaved and modulated ninth user data SIM-UD9 at second place of the memory area or at a middle section of the data queue and by putting the scrambled, interleaved and modulated tenth user data SIM-UD10 at third place of the memory area or at an end section of the data queue.

Similar alternatives as given above according to Figure 6 a) may be applied.

In a following fourth scrambling and interleaving step S/14 and the physical resource mapping step PRM performed at the base station BS the combination COMB1_2 is prepared for transmission to the mobile station MS.

Referring to Figure 7 a) a block diagram of control signalling bits on a control channel according to an even further preferred embodiment of the invention is shown. The control signalling bits may be transmitted for each process transport block being transmitted to the mobile station MS.

The control channel may be for example a shared control channel in HSPA such as High Speed Shared Control Channel (HS-SCCH) or a shared control channel in LTE such as Physical Downlink Control Channel (PDCCH). A sequence of the control signalling bits on the control channel may be provided for example within a downlink scheduling grant based on the DCI format 1 for LTE Release 8 as shown in Figure 7 a).

The control signalling information on a control channel may comprise a resource allocation header RAH with 1 bit for example, a resource block assignment RBA for the combination with several bits or bytes, a first modulation and coding scheme MCS1 using for example 5 bits for the ninth user data UD9 of the combination COMB, COMB1, COMB1_1, COMB1_2 (first transport block size TBS1 may be implicitly given, if modulation and coding scheme MCS1 is given such as proposed in 3GPP LTE, cf. 3GPP TS 36.213 Chapter 7.1.7.1), a first HARQ process number HPN1 using for example 3 bits for the ninth user data UD9 of the combination COMB, COMB1, COMB1_1, COMB1_2, a new data indicator NDI using for example 1 bit, a first redundancy version RV1 using for example 2 bits for the ninth user data UD9 of the combination COMB, COMB1, COMB1_1, COMB1_2, a TPC command (TPC = Transmission Power Control) for a physical uplink control channel TCFP and an indicator CI for the transmission of the combination COMB, COMB1,COMB 1_1, COMB1_2 using for example 1 bit. Physical layer processing parameters of the tenth user data UD10 or even further user data may be provided from the base station BS to the mobile station MS via inband signalling (see Figure 7 b)).

In an alternative, the first HARQ process number HPN1 may further differentiate between HARQ processes of two or more streams, if the radio link RL between the base station BS and the mobile station MS is based on a MIMO channel (MIMO = multiple input multiple output) with two or more parallel streams.

The first transport block size TBS1 of the ninth user data UD9 is implicitly defined at the base station BS and the mobile station MS by a predefined function such as TBS1 = TBS_UD1/(TBS_UD1 +TBS_UD2). Instead of using the indicator Cl, in LTE for example, an unused payload combination may be used such as the I_MCS parameter given in 3GPP TS 36.213 comprising for example a value of 29, 30 or 31.

In a further alternative, the new data indicator NDI may be redefined to indicate a new initial transmission or the transmission of the combination COMB, COMB1, COMB1_1, COMB1_2, if the combination COMB, COMB1, COMB1_1, COMB1_2 is permanently applied for the retransmissions and no retransmissions of single user data can happen.

In a further example (not shown in Figure 7 a)), the sequence of the control signalling bits on the control channel using for example the downlink scheduling grant of 3GPP LTE may further comprise a parameter indicating the number of user data UD9, UD10, ... combined in the combination COMB, COMB1, COMB1_1, COMB1_2, a resource size for the additional parity information of the second user data UD2, the second HARQ process number HP2 for the second user data UD2, a second redundancy version for the second user data UD2, a second modulation and coding scheme for the second user data UD2, and/or a second transport block size for the second user data UD2.

Referring to Figure 7 b) a block diagram of a sequence of inband control signalling bits as part of the combination COMB, COMB1, COMB1_1, COMB1_2 and encoding and rate matching of the sequence of control signalling bits is shown according to a further example. Inband means, that the control signalling bits may be multiplexed to the combination COMB, COMB1, COMB1_1, COMB1_2 of the user data UD9, UD10.

The sequence of control signalling bits may comprise a header info HI. The header info HI may comprise for example a parameter indicating the number of user data UD9, UD10, ... combined in the combination COMB, COMB 1, COMB1_1, COMB1_2. The sequence of control signalling bits may further comprise optionally a resource size RS2 for the tenth user data UD10, a second HARQ process number HPN2 using for example 3 bits for the tenth user data UD10 of the combination COMB, COMB1, COMB1_1, COMB1_2, a second redundancy version RV2 using for example 2 bits for the tenth user data UD10 of the combination COMB, COMB1, COMB1_1, COMB1_2, a second modulation scheme MS2 using for example 5 bits for the tenth user data UD10 of the combination COMB, COMB1, COMB1_1, COMB1_2, a second transport block size TBS2 for the tenth user data UD10 of the combination COMB, COMB1, COMB1_1, COMB1_2 and optionally padding P and/or CRC information CRC.

A resource size for the ninth user data UD9 may not be given, because the resource size for the ninth user data UD9 can be calculated by using the information of the resource block assignment RBA given in the downlink scheduling grant for example and the resource size RS2 for the tenth user data UD10.

Such sequence of control signalling bits may be used, if physical layer processing parameters of the ninth user data UD9 are separately transmitted on a control channel (see Figure 7 a)). The second transport block size TBS2 of the tenth user data UD10 is implicitly defined at the base station BS and the mobile station MS by a predefined function such as TBS2 = TBS_UD2/(TBS_UD1 +TBS UD2). By transmitting the resource size RS2 for the tenth user data UD10 for example via inband signalling and transmitting the information of the resource block assignment RBA for example via the downlink scheduling grant resource sizes of the further first parity information and/or the further second parity information can be flexibly adapted to reliabilities determined at the mobile station MS for a reception of the first and the second user data UD1, UD2 and using the indicators indicating a quality of reception at the mobile station MS and being transmitted from the mobile station MS to the base station BS.

In an alternative, the sequence of control signalling bits as part of the combination COMB, COMB1, COMB1_1, COMB1_2 may comprise a subset of the physical layer processing parameters given above.

In a further example, the sequence of control signalling bits as part of the combination COMB, COMB1, COMB1_1, COMB1_2 may further comprise the first modulation and coding scheme MCS1 including the first transport block size TBS1 for the ninth user data UD9 of the combination COMB, COMB1, COMB1_1, COMB1_2, the first HARQ process number HPN1 for the ninth user data UD9 of the combination COMB, COMB1, COMB1_1, COMB1_2, and/or the first redundancy version RV1 for the ninth user data UD9 of the combination COMB, COMB1, COMB1_1, COMB1_2.

In an even further example, the sequence of control signalling bits as part of the combination COMB, COMB1, COMB 1_1, COMB1_2 may comprise physical layer processing parameters for a combined retransmission of more than two initial transmissions of user data UD1, UD2, ....

In a following the sequence of control signalling bits is error correction coded in an error correction coding step ECE to get codeword bits CB and the codeword bits CB are rate matched for example in a self-decodable way by applying predefined RV parameters (RV = redundancy version) in a rate matching step RM to get error correction coded and rate matched control signalling bits CSIB.

The error correction coded and rate matched control signalling bits CSIB may be multiplexed to the combinations COMB1_1, COMB1_2 as shown in Figure 6a), b).

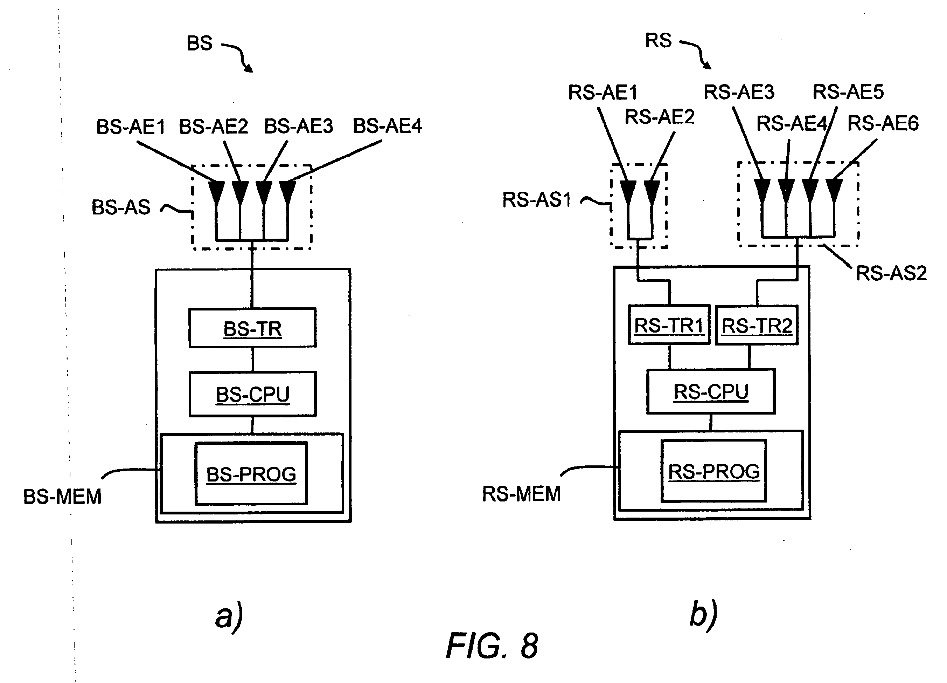

Referring to Figure 8 a) the base station BS may comprise an antenna system BS-AS, a transceiver BS-TR, a CPU (CPU = central processing unit) BS-CPU, and a computer readable medium BS-MEM. The CPU BS-CPU and the computer readable medium BS-MEM may be based on a digital baseband board of the base station BS. The CPU BS-CPU is foreseen for executing a computer readable program BS-PROG.

The antenna system BS-AS may comprise a first antenna element BS-AE1, a second antenna element BS-AE2, a third antenna element BS-AE3 and a fourth antenna element BS-AE4. In further alternatives, the antenna system BS-AS may comprise one, two, three or more than four antenna elements. The transceiver BS-TR transmits the user data UD1 to UD11 as single transmission or as combined transmissions COMB, COMB1, COMB1_1, COMB1_2 with multiplexed user data via the antenna system BS-AS to the mobile station MS and receives the positive or negative acknowledgements N1, N2, A1, A2, A3, N3, A4, A5 via the antenna system BS-AS for a downlink communication. In an alternative, a direction of the transmission of messages is reversed for an uplink communication.

The computer readable medium BS-MEM is foreseen for storing the computer readable program BS-PROG and may store the predefined multiplexing scheme, the equalization of the radio resource size of the user data and/or the adaptation of the resource size using the functional relationship between the size of the radio resource assigned for the first transmission or initial transmission of the first user data and the size of the radio resource assigned for the first transmission or initial transmission of the second user data.

The computer readable program BS-PROG is foreseen for executing steps of the methods MET1, MET3 belonging to the base station BS.

In particular, the computer readable program BS-PROG may determine the combination COMB, COMB1, COMB1_1, COMB1_2 by multiplexing the first and the second user data UD1, UD2 (in case of a downlink transmission) and may demultiplex the first and the second user data UD1, UD2 from the combination COMB, COMB1, COMB 1_1, COMB1_2 (in case of an uplink transmission).

Referring to Figure 8 b) the relay station RS may comprise a first antenna system RS-AS1, a first transceiver BS-TR1, a second antenna system RS-AS2, a second transceiver RS-TR2, a CPU RS-CPU, and a computer readable medium RS-MEM. The CPU RS-CPU and the computer readable medium RS-MEM may be based on a digital baseband board of the relay station RS. The CPU RS-CPU is foreseen for executing a computer readable program RS-PROG.

The first antenna system RS-AS1 may comprise a first antenna element RS-AE1 and a second antenna element RS-AE2. In further alternatives, the first antenna system RS-AS1 may comprise one or more than two antenna elements.

The first transceiver RS-TR1 transmits the user data UD1 to UD11 as single transmission or as combined transmissions COMB, COMB1, COMB1_1, COMB1_2 with multiplexed user data via the first antenna system RS-AS1 to the base station BS and receives the positive or negative acknowledgements N1, N2, A1, A2, A3, N3, A4, A5 via the first antenna system RS-AS1 for an uplink communication between the mobile station MS and the base station BS via the relay station RS. In an alternative, a direction of the transmission of messages is reversed for a downlink communication.

The second transceiver RS-TR2 transmits the user data UD1 to UD11 as single transmission or as combined transmissions COMB, COMB1, COMB1_1, COMB1_2 with multiplexed user data via the second antenna system RS-AS2 to the mobile station MS and receives the positive or negative acknowledgements N1, N2, A1, A2, A3, N3, A4, A5 via the second antenna system RS-AS2 for a downlink communication between the base station BS and the mobile station MS via the relay station RS. In an alternative, a direction of the transmission of messages is reversed for an uplink communication.

The computer readable medium RS-MEM is foreseen for storing the computer readable program RS-PROG and may store the predefined multiplexing scheme, the equalization of the radio resource size of the user data and/or the adaptation of the resource size using the functional relationship between the size of the radio resource assigned for the first transmission or initial transmission of the first user data and the size of the radio resource assigned for the first transmission or initial transmission of the second user data.

The computer readable program RS-PROG is foreseen for executing steps of the methods MET1, MET3 belonging to the relay station RS (above mentioned alternatives of the method MET1 using the relay station RS are not shown in Figure 2).

In particular, the computer readable program RS-PROG may determine the combination COMB, COMB1, COMB1_1, COMB1_2 by multiplexing the first and the second user data UD1, UD2 (in case of a downlink transmission or an uplink transmission) and may demultiplex the first and the second user data UD1, UD2 from the combination COMB, COMB1, COMB1_1, COMB1_2 (in case of an uplink transmission or a downlink transmission).

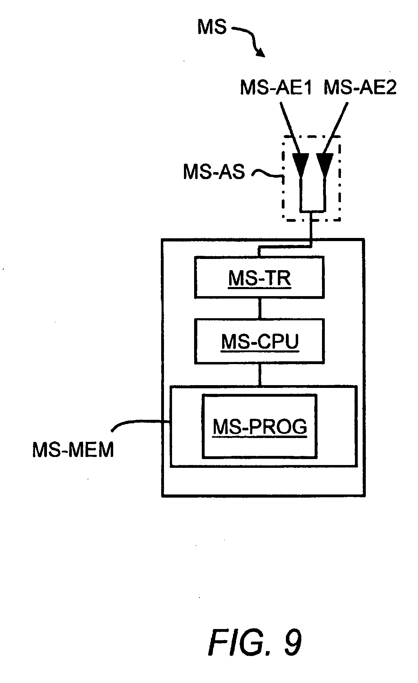

Referring to Figure 9 a mobile station MS comprises an antenna system MS-AS, a transceiver MS-TR, a CPU (CPU = central processing unit) MS-CPU, and a computer readable medium MS-MEM. The CPU MS-CPU and the computer readable medium MS-MEM may be based on a digital baseband board of the mobile station MS. The CPU MS-CPU is foreseen for executing a computer readable program MS-PROG.

The antenna system MS-AS may comprise a first antenna element MS-AE1 and a second antenna element MS-AE2. Alternatively, the antenna system MS-AS may comprise one antenna element or more than two antenna elements.

The transceiver MS-TR receives the user data UD1 to UD11 as single transmission or as combined transmissions COMB, COMB1, COMB1_1, COMB1_2 with multiplexed user data via the antenna system MS-AS from the base station BS or the relay station RS and transmits the positive or negative acknowledgements N1, N2, A1, A2, A3, N3, A4, A5 via the antenna system MS-AS for a downlink communication. In an alternative, a direction of the transmission of messages is reversed for an uplink communication.

The computer readable medium MS-MEM is foreseen for storing the computer readable program MS-PROG and may store the predefined multiplexing scheme, the equalization of the radio resource size of the user data and/or the adaptation of the resource size using the functional relationship between the size of the radio resource assigned for the first transmission or initial transmission of the first user data and the size of the radio resource assigned for the first transmission or initial transmission of the second user data.

The computer readable program MS-PROG is foreseen for executing steps of the methods MET1, MET3 belonging to the mobile station MS.

In particular, the computer readable program MS-PROG may determine the combination COMB, COMB1, COMB1_1, COMB1_2 by multiplexing the first and the second user data UD1, UD2 (in case of an uplink transmission) and may demultiplex the first and the second user data UD1, UD2 from the combination COMB, COMB1, COMB1_1, COMB1_2 (in case of a downlink transmission).

## Claims

1. A method (MET1, MET2, MET3) for transmission of data from a first network node (BS, RS, MS) of a radio communication system (RCS) to a second network node (MS, RS, BS) of the radio communication system (RCS), said method (MET1, MET2, MET3) comprising the steps of.
- transmitting (M1/1, M1/4) first user data (UD1) and at least second user data (UD2) from said first network node (BS, RS, MS) to said second network node (MS, RS, BS),
- transmitting (M1/6) a first negative acknowledgement (N1) from the second network node (MS, RS, BS), if the second network node (MS, RS, BS) cannot recover error free said first user data (UD1),
- transmitting (M1/9) at least a second negative acknowledgement (N2) from the second network node (MS, RS, BS), if the second network node (MS, RS, BS) cannot recover error free said at least one second user data (UD2),
- determining (M1/12, M2/4, M3/6) at the first network node (BS, RS, MS) a combination (COMB, COMB1, COMB1_1, COMB1_2) of third user data (UD9) comprising parity information of the first user data (UD1) and of at least one fourth user data (UD10) comprising parity information of the at least one second user data (UD2) by multiplexing the third user data (UD9) and the at least one fourth user data (UD10) according to a predefined multiplexing scheme, - transmitting (M1/15, M2/7, M3/11) to the second network node (MS, RS, BS) the combination (COMB, COMB1, COMB1_1, COMB1_2), and
- demultiplexing at the second network node (MS, RS, BS) the third user data (UD9) and the at least one fourth user data (UD10) from the combination (COMB, COMB1, COMB1_1, COMB1_2) in accordance to a predefined de-multiplexing scheme corresponding to said predefined multiplexing scheme,
**characterized in that** said predefined multiplexing and demultiplexing schemes comprise an adaptation of a radio resource size of said third user data (UD9) by using a functional relationship between the radio resource size of said third user data (UD9), a size of a radio resource assigned for a first transmission of the first user data (UD1) and a size of at least one radio resource assigned for a first transmission of the at least one second user data (UD2),
and **characterised in that** said predefined multiplexing and demultiplexing schemes comprise an adaptation of a radio resource size of said at least one fourth user data (UD10) by using a functional relationship between the radio resource size of said at least one fourth user data (UD10), a size of a radio resource assigned for a first transmission of the first user data (UD1) and a size of at least one radio resource assigned for a first transmission of the at least one second user data (UD2).

2. Method (MET1, MET3) according to claim 1, wherein the parity information of the first user data (UD1) and the parity information of the at least one second user data (UD2) are multiplexed prior to or after modulation and wherein the parity information of the first user data (UD1) and the parity information of the at least one second user data (UD2) are modulated with a same modulation scheme or with different modulation schemes.

3. Method (MET1, MET2, MET3) according to any of the claims, wherein the determining step (M1/12, M2/4, M3/6) for the combination (COMB, COMB1, COMB1_1, COMB1_2) is applied, if the second negative acknowledgement (N2) is received within a predefined time interval (TI) at the first network node (BS, RS, MS).

4. Method (MET1, MET2, MET3) according to any of the preceding claims, wherein the method (MET1, MET2, MET3) is a synchronous automatic repeat request process and wherein an indication of the third user data (UD9) depending on the first user data (UD1) and at least one indication of the at least one fourth user data (UD10) depending on the at least one second user data (UD2) is implicitly provided to the second network node (MS, RS, BS) depending on a positive or negative acknowledgement (N2, A1) of the at least one second user data (UD2).

5. Method (MET1, MET2, MET3) according to any of the preceding claims, wherein the method (MET1, MET2, MET3) further comprises the step of multiplexing (M1/12, M2/4, M3/6) at least one physical layer processing parameter (HI, RS2, HPN2, RV2, MCS2, TBS2, P, CRC) of the at least one fourth user data (UD10) to the combination (COMB, COMB1, COMB1_1, COMB1_2) of the third user data (UD9) and the at least one fourth user data (UD10).

6. Method (MET1, MET2, MET3) according to any of the preceding claims, wherein the method (MET1, MET2, MET3) further comprises the step of applying or adapting the transmission of the combination (COMB, COMB1, COMB1_1, COMB1_2) depending on a quality of service class of the third user data (UD9) and the at least one fourth user data (UD10).

7. A first network node (BS, RS, MS) for use in a radio communication system (RCS), said first network node (BSRS, MS) comprising:
- means (BS-AS, BS-TR, RS-AS1, RS-TR1, RS-AS2, RS-TR2, MS-AS, MS-TR) for transmitting first user data (UD1) and at least one second user data (UD2) to a second network node (MS, RS, BS),
- means (BS-AS, BS-TR, RS-AS1, RS-TR1, RS-AS2, RS-TR2, MS-AS, MS-TR) for receiving a first negative acknowledgement (N1), if a second network node (MS, RS, BS) cannot recover said first user data (UD1) error free and for receiving a second negative acknowledgement (N2), if the second network node (MS, RS, BS) cannot recover error free said at least one second user data (UD2),
- means (BS-PROG, RS-PROG, MS-PROG) for determining a combination (COMB, COMB1, COMB1_1, COMB1_2) of third user data (UD9) comprising parity information of the first user data (UD1) and of at least one fourth user data (UD10) comprising parity information of the at least one second user data (UD2) by multiplexing the third user data (UD9) and the at least one fourth user data (UD10), according to a predefined multiplexing scheme, and
- means (BS-AS, BS-TR, RS-AS1, RS-TR1, RS-AS2, RS-TR2, MS-AS, MS-TR) for transmitting the combination (COMB, COMB1, COMB1_1, COMB1_2) to the second network node (MS, BS, RS), **characterized in that** said first network node (BS, RS, MS) further comprises means (BS-MEM, RS-MEM, MS-MEM) for adapting in accordance with the predefined multiplexing scheme a radio resource size of said third user data (UD9) by using a functional relationship between the radio resource size of said third user data (UD9), a size of a radio resource assigned for a first transmission the first user data (UD1) and a size of at least one radio resource assigned for a first transmission of the at least one second user data (UD2),
and **characterised in that** said first network node (BS, RS, MS) further comprises means (BS-MEM, RS-MEM, MS-MEM) for adapting in accordance with the predefined multiplexing scheme a radio resource size of said at least one fourth user data (UD10) by using a functional relationship between the radio resource size of said at least one fourth user data (UD10), a size of a radio resource assigned for a first transmission of the first user data (UD1) and a size of at least one radio resource assigned for a first transmission of the at least one second user data (UD2).

8. First network node (BS, RS, MS) according to claim 7, wherein the first network node (BS, RS, MS) is a base station (BS), a relay station (RS) or a mobile station (MS).

9. A second network node (MS, RS, BS) for use in a radio communication system (RCS), said second network node (MS, RS, BS) comprising:
- means (MS-AS, MS-TR, RS-AS1, RS-TR1, RS-AS2, RS-TR2, BS-AS, BS-TR) for receiving first user data (UD1) and at least one second user data (UD2) from a first network node (MS, RS, BS),
- means (MS-AS, MS-TR, RS-AS1, RS-TR1, RS-AS2, RS-TR2, BS-AS, BS-TR) for transmitting afirst negative acknowledgement (N1), if the second network node (MS, RS, BS) cannot recover first user data (UD1) error free and for transmitting at least a second negative acknowledgement (N2), if the second network node (MS, RS, BS) cannot recover error free at least one second user data (UD2),
- means (MS-AS, MS-TR, RS-AS1, RS-TR1, RS-AS2, RS-TR2, BS-AS, BS-TR) for receiving a combination (COMB, COMB1, COMB1_1, COMB1_2) of third user data (UD9) comprising parity information of the first user data (UD1) and of at least one fourth user data (UD10) comprising parity information of the at least one second user data (UD2), the combination (COMB, COMB1, COMB1_1, COMB1_2) corresponding to a predefined multiplexing scheme, and
- means (MS-PROG, RS-PROG, BS-PROG) for demultiplexing the third user data (UD9) and the at least one fourth user data (UD10) from the combination (COMB, COMB1, COMB1_1, COMB1_2)in accordance to a predefined demultiplexing scheme corresponding to the predefined multiplexing scheme,
**characterized in that** said second network node (MS, RS, BS) further comprises means (BS-MEM, RS-MEM, MS-MEM) for adapting, in accordance with the predefined demultiplexing scheme, a radio resource size of said third user data (UD9) by using a functional relationship between the radio resource size of said third user data (UD9), a size of a radio resource assigned for a first transmission of the first user data (UD1) and a size of at least one radio resource assigned for a first transmission of the at least one second user data (UD2),
and **characterised in that** said second network node (MS, RS, BS) further comprises means (MS-MEM, RS-MEM, BS-MEM) for adapting in accordance with the predefined demultiplexing scheme a radio resource size of said at least one fourth user data (UD10) by using a functional relationship between the radio resource size of said at least one fourth user data (UD10), a size of a radio resource assigned for a first transmission of the first user data (UD1) and a size of at least one radio resource assigned for a first transmission of the at least one second user data (UD2).

10. Second network node (MS, RS, BS) according to claim 9, wherein the second network node (MS, RS, BS) is a mobile station (MS), a relay station (RS) or a base station (BS).

## Patentansprüche

1. Verfahren (MET1, MET2, MET3) zur Übertragung von Daten von einem ersten Netzwerkknoten (BS, RS, MS) eines Funkkommunikationssystems (RCS) an einen zweiten Netzwerkknoten (MS, RS, BS) des Funkkommunikationssystems (RCS), wobei das besagte Verfahren (MET1, MET2, MET3) die folgenden Schritte umfasst:
- Übertragen (M1/1, M1/4) von ersten Benutzerdaten (UD1) und mindestens zweiten Benutzerdaten (UD2) von dem besagten ersten Netzwerkknoten (BS, RS, MS) an den besagten zweiten Netzwerkknoten (MS, RS, BS),
- Übertragen (M1/6) einer ersten negativen Bestätigung (N1) von dem zweiten Netzwerkknoten (MS, RS, BS), wenn der zweite Netzwerkknoten (MS, RS, BS) die besagten ersten Benutzerdaten (UD1) nicht fehlerfrei rückgewinnen kann,
- Übertragen (M1/9) mindestens einer zweiten negativen Bestätigung (N2) von dem zweiten Netzwerkknoten (MS, RS, BS), wenn der zweite Netzwerkknoten (MS, RS, BS) das besagte mindestens eine zweite Benutzerdatenelement (UD2) nicht fehlerfrei rückgewinnen kann,
- Bestimmen (M1/12, M2/4, M3/6), an dem ersten Netzwerkknoten (BS, RS, MS), einer Kombination (COMB, COMB1, COMB1_1, COMB1_2) von dritten Benutzerdaten (UD9), welche Paritätsinformationen der ersten Benutzerdaten (UD1) enthalten, und von mindestens einem vierten Benutzerdatenelement (UD10), welches Paritätsinformationen des mindestens einen zweiten Benutzerdatenelements (UD2) enthalten, durch Multiplexen der dritten Benutzerdaten (UD9) und des mindestens einen vierten Benutzerdatenelements (UD10) gemäß einem vordefinierten Multiplex-Schema,
- Übertragen (M1/15, M2/7, M3/11) der Kombination (COMB, COMB1, COMB1_1, COMB1_2) an den zweiten Netzwerkknoten (MS, RS, BS), und
- Demultiplexen, an dem zweiten Netzwerkknoten (MS, RS, BS), der dritten Benutzerdaten (UD9) und des mindestens einen vierten Benutzerdatenelements (UD10) aus der Kombination (COMB, COMB1, COMB1_1, COMB1_2) gemäß einem vordefinierten Demultiplex-Schema, welches dem besagten vordefinierten Multiplex-Schema entspricht,
**dadurch gekennzeichnet, dass** die besagten Multiplex- und Demultiplex-Schemen eine Anpassung einer Funkressourcengröße der besagten dritten Benutzerdaten (UD9) unter Verwendung eines funktionalen Zusammenhangs zwischen der Funkressourcengröße der besagten dritten Benutzerdaten (UD9), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfassen,
und **dadurch gekennzeichnet, dass** die besagten vordefinierten Multiplex- und Demultiplex-Schemen eine Anpassung einer Funkressourcengröße des besagten mindestens einen vierten Benutzerdatenelements (UD10) unter Verwendung eines funktionalen Zusammenhangs zwischen der Funkressourcengröße des besagten mindestens einen vierten Benutzerdatenelements (UD10), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfassen.

2. Verfahren (MET1, MET3) nach Anspruch 1, wobei die Paritätsinformationen der ersten Benutzerdaten (UD1) und die Paritätsinformationen des mindestens einen zweiten Benutzerdatenelements (UD2) vor oder nach der Modulation gemultiplext werden, und wobei die Paritätsinformationen der ersten Benutzerdaten (UD1) und des mindestens einen zweiten Benutzerdatenelements (UD2) mit einem selben Modulationsschema oder mit unterschiedlichen Modulationsschemen moduliert werden.

3. Verfahren (MET1, MET2, MET3) nach einem beliebigen der Ansprüche, wobei der Schritt des Bestimmens (M1/12, M2/4, M3/6) für die Kombination (COMB, COMB1, COMB1_2) angewendet wird, wenn die zweite negative Bestätigung (N2) innerhalb eines vordefinierten Zeitintervalls (TI) an dem ersten Netzwerkknoten (BS, RS, MS) empfangen wird.

4. Verfahren (MET1, MET2, MET3) nach einem beliebigen der vorstehenden Ansprüche, wobei das Verfahren (MET1, MET2, MET3) ein synchroner automatischer Wiederholungsanforderungsprozess ist, und wobei eine Angabe der dritten Benutzerdaten (UD9), welche von den ersten Benutzerdaten (UD1) abhängt, und mindestens eine Angabe des mindestens einen vierten Benutzerdatenelements (UD10), welches von dem mindestens einen zweiten Benutzerdatenelement (UD2) abhängt, in Abhängigkeit von einer positiven oder negativen Bestätigung (N2, A1) des mindestens einen zweiten Benutzerdatenelements (UD2) implizit an den zweiten Netzwerkknoten (MS, RS, BS) bereitgestellt wird.

5. Verfahren (MET1, MET2, MET3) nach einem beliebigen der vorstehenden Ansprüche, wobei das Verfahren (MET1, MET2, MET3) weiterhin den Schritt des Multiplexens (M1/12, M2/4, M3/6) mindestens eines Verarbeitungsparameters der physischen Schicht (HI, RS2, HPN2, RV2, MCS2, TBS2, P, CRC) des mindestens einen vierten Benutzerdatenelements (UD10) in die Kombination (COMB, COMB1, COMB1_1, COMB1_2) der dritten Benutzerdaten (UD9) und des mindestens einen vierten Benutzerdatenelements (UD10) umfasst.

6. Verfahren (MET1, MET2, MET3) nach einem beliebigen der vorstehenden Ansprüche, wobei das Verfahren (MET1, MET2, MET3) weiterhin den Schritt des Anwendens oder des Anpassens der Übertragung an die Kombination (COMB, COMB1, COMB1_1, COMB1_2) in Abhängigkeit von einer Dienstgüteklasse der dritten Benutzerdaten (UD9) und des mindestens einen vierten Benutzerdatenelements (UD10) umfasst.

7. Erster Netzwerkknoten (BS, RS, MS) zur Verwendung in einem Funkkommunikationssystem (RCS), wobei der besagte erste Netzwerkknoten (BS, RS, MS) umfasst:
- Mittel (BS-AS, BS-TR, RS-AS1, RS-TR1, RS-AS2, RS-TR2, MS-AS, MS-TR) zum Übertragen von ersten Benutzerdaten (UD1) und mindestens eines zweiten Benutzerdatenelements (UD2) an einen zweiten Netzwerkknoten (MS, RS, BS),
- Mittel (BS-AS, BS-TR, RS-AS1, RS-TR1, RS-AS2, RS-TR2, MS-AS, MS-TR) zum Empfangen einer ersten negativen Bestätigung (N1), wenn ein zweiter Netzwerkknoten (MS, RS, BS) die besagten ersten Benutzerdaten (UD1) nicht fehlerfrei rückgewinnen kann, und zum Empfangen einer zweiten negativen Bestätigung (N2), wenn der zweite Netzwerkknoten (MS, RS, BS) das besagte mindestens eine zweite Benutzerdatenelement (UD2) nicht fehlerfrei rückgewinnen kann,
- Mittel (BS-PROG, RS-PROG, MS-PROG) zum Bestimmen einer Kombination (COMB, COMB1, COMB1_1, COMB1_2) von dritten Benutzerdaten (UD9), welche Paritätsinformationen der ersten Benutzerdaten (UD1) enthalten, und von mindestens einem vierten Benutzerdatenelement (UD10), welches Paritätsinformationen des mindestens einen zweiten Benutzerdatenelements (UD2) enthalten, durch Multiplexen der dritten Benutzerdaten (UD9) und des mindestens einen vierten Benutzerdatenelements (UD10) gemäß einem vordefinierten Multiplex-Schema, und
- Mittel (BS-AS, BS-TR, RS-AS1, RS-TR1, RS-AS2, RS-TR2, MS-AS, MS-TR) zum Übertragen der Kombination (COMB, COMB1, COMB1_1, COMB1_2) an den zweiten Netzwerkknoten (MS, BS, RS),
**dadurch gekennzeichnet, dass** der besagte erste Netzwerkknoten (BS, RS, MS) weiterhin Mittel (BS-MEM, RS-MEM, MS-MEM) zum Anpassen, gemäß dem vordefinierten Multiplex-Schema, einer Funkressourcengröße der besagten dritten Benutzerdaten (UD9) unter Verwendung eines funktionalen Zusammenhangs zwischen der Funkressourcengröße der besagten dritten Benutzerdaten (UD9), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfasst,
und **dadurch gekennzeichnet, dass** der besagte erste Netzwerkknoten (BS, RS, MS) weiterhin Mittel (BS-MEM, RS-MEM, MS-MEM) zum Anpassen, gemäß dem vordefinierten Multiplex-Schema, einer Funkressourcengröße des besagten mindestens einen vierten Benutzerdatenelements (UD10) unter Verwendung eines funktionalen Zusammenhangs zwischen der Funkressourcengröße des besagten mindestens einen vierten Benutzerdatenelements (UD10), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfasst.

8. Erster Netzwerkknoten (BS, RS, MS) nach Anspruch 7, wobei der erste Netzwerkknoten (BS, RS, MS) eine Basisstation (BS), eine Relaisstation (RS) oder eine Mobilstation (MS) ist.

9. Zweiter Netzwerkknoten (MS, RS, BS) zur Verwendung in einem Funkkommunikationssystem (RCS), wobei der besagte zweite Netzwerkknoten (MS, RS, BS) umfasst:
- Mittel (MS-AS, MS-TR, RS-AS1, RS-TR1, RS-AS2, RS-TR2, MS-AS, BS-TR) zum Empfangen von ersten Benutzerdaten (UD1) und mindestens eines zweiten Benutzerdatenelements (UD2) von einem ersten Netzwerkknoten (MS, RS, BS),
- Mittel (MS-AS, MS-TR, RS-AS1, RS-TR1, RS-AS2, RS-TR2, MS-AS, BS-TR) zum Übertragen einer ersten negativen Bestätigung (N1), wenn der zweite Netzwerkknoten (MS, RS, BS) die besagten ersten Benutzerdaten (UD1) nicht fehlerfrei rückgewinnen kann, und zum Übertragen mindestens einer zweiten negativen Bestätigung (N2), wenn der zweite Netzwerkknoten (MS, RS, BS) das besagte mindestens eine zweite Benutzerdatenelement (UD2) nicht fehlerfrei rückgewinnen kann,
- Mittel (MS-AS, MS-TR, RS-AS1, RS-TR1, RS-AS2, RS-TR2, MS-AS, BS-TR) zum Empfangen einer Kombination (COMB, COMB1, COMB1_1, COMB1_2) von dritten Benutzerdaten (UD9), welche Paritätsinformationen der ersten Benutzerdaten (UD1) enthalten, und von mindestens einem vierten Benutzerdatenelement (UD10), welches Paritätsinformationen des mindestens einen zweiten Benutzerdatenelements (UD2) enthalten, wobei die Kombination (COMB, COMB1, COMB1_1, COMB1_2) einem vordefinierten Multiplex-Schema entspricht, und
- Mittel (MS-PROG, RS-PROG, BS-PROG) zum Demultiplexen der dritten Benutzerdaten (UD9) und des mindestens einen vierten Benutzerdatenelements (UD10) aus der Kombination (COMB, COMB1, COMB1_1, COMB1_2) gemäß einem Demultiplex-Schema, welches dem vordefinierten Multiplex-Schema entspricht,
**dadurch gekennzeichnet, dass** der besagte zweite Netzwerkknoten (MS, RS, BS) weiterhin Mittel (BS-MEM, RS-MEM, MS-MEM) zum Anpassen, gemäß dem vordefinierten Demultiplex-Schema, einer Funkressourcengröße der besagten dritten Benutzerdaten (UD9) unter Verwendung eines funktionalen Zusammenhangs zwischen der Funkressourcengröße der besagten dritten Benutzerdaten (UD9), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfasst,
und **dadurch gekennzeichnet, dass** der besagte zweite Netzwerkknoten (MS, RS, BS) weiterhin Mittel (MS-MEM, RS-MEM, BS-MEM) zum Anpassen, gemäß dem vordefinierten Demultiplex-Schema, einer Funkressourcengröße des besagten mindestens einen vierten Benutzerdatenelements (UD10) unter Verwendung eines funktionalen Zusammenhangs zwischen der Funkressourcengröße des besagten mindestens einen vierten Benutzerdatenelements (UD10), einer Größe einer für eine erste Übertragung der ersten Benutzerdaten (UD1) zugeteilten Funkressource und einer Größe mindestens einer für eine erste Übertragung des mindestens einen zweiten Benutzerdatenelements (UD2) zugeteilten Funkressource umfasst.

10. Zweiter Netzwerkknoten (MS, RS, BS) nach Anspruch 9, wobei der zweite Netzwerkknoten (MS, RS, BS) eine Mobilstation, eine Relaisstation (RS) oder eine Basisstation (BS) ist.

## Revendications

1. Procédé (MET1, MET2, MET3) de transmission de données à partir d'un premier noeud de réseau (BS, RS, MS) d'un système de communication radio (RCS) vers un deuxième noeud de réseau (MS, RS, BS) du système de communication radio (RCS), ledit procédé (MET1, MET2, MET3) comprenant les étapes suivantes :
- transmettre (M1/1, M1/4) une première donnée d'utilisateur (UD1) et au moins une deuxième donnée d'utilisateur (UD2) à partir dudit premier noeud de réseau (BS, RS, MS) vers ledit deuxième noeud de réseau (MS, RS, BS),
- transmettre (M1/6) un premier accusé de réception négatif (N1) à partir du deuxième noeud de réseau (MS, RS, BS), si le deuxième noeud de réseau (MS, RS, BS) ne peut pas récupérer ladite première donnée d'utilisateur (UD1) sans erreur,
- transmettre (M1/9) au moins un deuxième accusé de réception négatif (N2) à partir du deuxième noeud de réseau (MS, RS, BS), si le deuxième noeud de réseau (MS, RS, BS) ne peut pas récupérer ladite au moins une deuxième donnée d'utilisateur (UD2) sans erreur,
- déterminer (M1/12, M2/4, M3/6) au niveau du premier noeud de réseau (BS, RS, MS) une combinaison (COMB, COMB1, COMB1_1, COMB1_2) d'une troisième donnée d'utilisateur (UD9) comprenant des informations de parité de la première donnée d'utilisateur (UD1) et d'au moins une quatrième donnée d'utilisateur (UD10) comprenant des informations de parité de l'au moins une deuxième donnée d'utilisateur (UD2) en multiplexant la troisième donnée d'utilisateur (UD9) et l'au moins une quatrième donnée d'utilisateur (UD10) conformément à un schéma de multiplexage prédéfini,
- transmettre (M1/15, M2/7, M3/11) au deuxième noeud de réseau (MS, RS, BS) la combinaison (COMB, COMB1, COMB1_1, COMB1_2), et
- démultiplexer au niveau du deuxième noeud de réseau (MS, RS, BS) la troisième donnée d'utilisateur (UD9) et l'au moins une quatrième donnée d'utilisateur (UD10) de la combinaison (COMB, COMB1, COMB1_1, COMB1_2) conformément à un schéma de démultiplexage prédéfini correspondant audit schéma de multiplexage prédéfini,
**caractérisé en ce que** lesdits schémas de multiplexage et de démultiplexage prédéfinis comprennent une adaptation d'une taille de ressource radio de ladite troisième donnée d'utilisateur (UD9) en utilisant une relation fonctionnelle entre la taille de ressource radio de ladite troisième donnée d'utilisateur (UD9), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2),
et **caractérisé en ce que** lesdits schémas de multiplexage et de démultiplexage prédéfinis comprennent une adaptation d'une taille de ressource radio de ladite au moins une quatrième donnée d'utilisateur (UD10) en utilisant une relation fonctionnelle entre la taille de ressource radio de ladite au moins une quatrième donnée d'utilisateur (UD10), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2),

2. Procédé (MET1, MET3) selon la revendication 1, dans lequel les informations de parité de la première donnée d'utilisateur (UD1) et les informations de parité de l'au moins une deuxième donnée d'utilisateur (UD2) sont multiplexées avant ou après la modulation et dans lequel les informations de parité de la première donnée d'utilisateur (UD1) et les informations de parité de l'au moins une deuxième donnée d'utilisateur (UD2) sont modulées avec un même schéma de modulation ou avec des schémas de modulation différents.

3. Procédé (MET1, MET2, MET3) selon l'une quelconque des revendications, dans lequel l'étape de détermination (M1/12, M2/4, M3/6) pour la combinaison (COMB, COMB1, COMB1_1, COMB1_2) est appliquée, si le deuxième accusé de réception négatif (N2) est reçu dans un intervalle de temps prédéfini (TI) au niveau du premier noeud de réseau (BS, RS, MS).

4. Procédé (MET1, MET2, MET3) selon l'une quelconque des revendications précédentes, dans lequel le procédé (MET1, MET2, MET3) est un processus de demande de répétition automatique synchrone et dans lequel une indication de la troisième donnée d'utilisateur (UD9) dépendant de la première donnée d'utilisateur (UD1) et au moins une indication de l'au moins une quatrième donnée d'utilisateur (UD10) dépendant de l'au moins une deuxième donnée d'utilisateur (UD2) sont fournies implicitement au deuxième noeud de réseau (MS, RS, BS) en fonction d'un accusé de réception positif ou négatif (N2, A1) de l'au moins une deuxième donnée d'utilisateur (UD2).

5. Procédé (MET1, MET2, MET3) selon l'une quelconque des revendications précédentes, dans lequel le procédé (MET1, MET2, MET3) comprend en outre l'étape de multiplexage (M1/12, M2/4, M3/6) d'au moins un paramètre de traitement de couche physique (HI, RS2, HPN2, RV2, MCS2, TBS2, P, CRC) de l'au moins une quatrième donnée d'utilisateur (UD10) sur la combinaison (COMB, COMB1, COMB1_1, COMB1_2) de la troisième donnée d'utilisateur (UD9) et de l'au moins une quatrième donnée d'utilisateur (UD10).

6. Procédé (MET1, MET2, MET3) selon l'une quelconque des revendications précédentes, le procédé (MET1, MET2, MET3) comprenant en outre l'étape d'application ou d'adaptation de la transmission de la combinaison (COMB, COMB1, COMB1_1, COMB1_2) en fonction d'une classe de qualité de service de la troisième donnée d'utilisateur (UD9) et de l'au moins une quatrième donnée d'utilisateur (UD10).

7. Premier noeud de réseau (BS, RS, MS) destiné à être utilisé dans un système de communication radio (RCS), ledit premier noeud de réseau (BS, RS, MS) comprenant :
- des moyens (BS-AS, BS-TR, RS-AS1, RS-TR1, RS-AS2, RS-TR2, MS-AS, MS-TR) pour transmettre une première donnée d'utilisateur (UD1) et au moins une deuxième donnée d'utilisateur (UD2) à un deuxième noeud de réseau (MS, RS, BS),
- des moyens (BS-AS, BS-TR, RS-AS1, RS-TR1, RS-AS2, RS-TR2, MS-AS, MS-TR) pour recevoir un premier accusé de réception négatif (N1), si un deuxième noeud de réseau (MS, RS, BS) ne peut pas récupérer ladite première donnée d'utilisateur (UD1) sans erreur et pour recevoir un deuxième accusé de réception négatif (N2), si le deuxième noeud de réseau (MS, RS, BS) ne peut pas récupérer ladite au moins une deuxième donnée d'utilisateur (UD2) sans erreur,
- des moyens (BS-PROG, RS-PROG, MS-PROG) pour déterminer une combinaison (COMB, COMB1, COMB1_1, COMB1_2) d'une troisième donnée d'utilisateur (UD9) comprenant des informations de parité de la première donnée d'utilisateur (UD1) et d'au moins une quatrième donnée d'utilisateur (UD10) comprenant des informations de parité de l'au moins une deuxième donnée d'utilisateur (UD2) en multiplexant la troisième donnée d'utilisateur (UD9) et l'au moins une quatrième donnée d'utilisateur (UD10) conformément à un schéma de multiplexage prédéfini, et
- des moyens (BS-AS, BS-TR, RS-AS1, RS-TR1, RS-AS2, RS-TR2, MS-AS, MS-TR) pour transmettre la combinaison (COMB, COMB1, COMB1_1, COMB1_2) au deuxième noeud de réseau (MS, BS, RS),
**caractérisé en ce que** ledit premier noeud de réseau (BS, RS, MS) comprend en outre des moyens (BS-MEM, RS-MEM, MS-MEM) pour adapter, en fonction du schéma de multiplexage prédéfini, une taille de ressource radio de ladite troisième donnée d'utilisateur (UD9) en utilisant une relation fonctionnelle entre la taille de ressource radio de ladite troisième donnée d'utilisateur (UD9), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2),
et **caractérisé en ce que** ledit premier noeud de réseau (BS, RS, MS) comprend en outre des moyens (BS-MEM, RS-MEM, MS-MEM) pour adapter, en fonction du schéma de multiplexage prédéfini, une taille de ressource radio de ladite au moins une quatrième donnée d'utilisateur (UD10) en utilisant une relation fonctionnelle entre la taille de ressource radio de ladite au moins une quatrième donnée d'utilisateur (UD10), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2).

8. Premier noeud de réseau (BS, RS, MS) selon la revendication 7, le premier noeud de réseau (BS, RS, MS) étant une station de base (BS), une station de relais (RS) ou une station mobile (MS).

9. Deuxième noeud de réseau (MS, RS, BS) destiné à être utilisé dans un système de communication radio (RCS), ledit deuxième noeud de réseau (MS, RS, BS) comprenant :
- des moyens (MS-AS, MS-TR, RS-AS1, RS-TR1, RS-AS2, RS-TR2, BS-AS, BS-TR) pour recevoir une première donnée d'utilisateur (UD1) et au moins une deuxième donnée d'utilisateur (UD2) à partir d'un premier noeud de réseau (MS, RS, BS),
- des moyens (MS-AS, MS-TR, RS-AS1, RS-TR1, RS-AS2, RS-TR2, BS-AS, BS-TR) pour transmettre un premier accusé de réception négatif (N1), si le deuxième noeud de réseau (MS, RS, BS) ne peut pas récupérer une première donnée d'utilisateur (UD1) sans erreur et pour transmettre au moins un deuxième accusé de réception négatif (N2), si le deuxième noeud de réseau (MS, RS, BS) ne peut pas récupérer au moins une deuxième donnée d'utilisateur (UD2) sans erreur,
- des moyens (MS-AS, MS-TR, RS-AS1, RS-TR1, RS-AS2, RS-TR2, BS-AS, BS-TR) pour recevoir une combinaison (COMB, COMB1, COMB1_1, COMB1_2) d'une troisième donnée d'utilisateur (UD9) comprenant des informations de parité de la première donnée d'utilisateur (UD1) et d'au moins une quatrième donnée d'utilisateur (UD10) comprenant des informations de parité de l'au moins une deuxième donnée d'utilisateur (UD2), la combinaison (COMB, COMB1, COMB1_1, COMB1_2) correspondant à un schéma de multiplexage prédéfini, et
- des moyens (MS-PROG, RS-PROG, BS-PROG) pour démultiplexer la troisième donnée d'utilisateur (UD9) et l'au moins une quatrième donnée d'utilisateur (UD10) de la combinaison (COMB, COMB1, COMB1_1, COMB1_2) conformément à un schéma de démultiplexage prédéfini correspondant au schéma de multiplexage prédéfini,
**caractérisé en ce que** ledit deuxième noeud de réseau (MS, RS, BS) comprend en outre des moyens (BS-MEM, RS-MEM, MS-MEM) pour adapter, en fonction du schéma de démultiplexage prédéfini, une taille de ressource radio de ladite troisième donnée d'utilisateur (UD9) en utilisant une relation fonctionnelle entre la taille de ressource radio de ladite troisième donnée d'utilisateur (UD9), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2),
et **caractérisé en ce que** ledit deuxième noeud de réseau (MS, RS, BS) comprend en outre des moyens (MS-MEM, RS-MEM, BS-MEM) pour adapter, en fonction du schéma de démultiplexage prédéfini, une taille de ressource radio de ladite au moins une quatrième donnée d'utilisateur (UD10) en utilisant une relation fonctionnelle entre la taille de ressource radio de ladite au moins une quatrième donnée d'utilisateur (UD10), une taille d'une ressource radio attribuée à une première transmission de la première donnée d'utilisateur (UD1) et une taille d'au moins une ressource radio attribuée à une première transmission de l'au moins une deuxième donnée d'utilisateur (UD2).

10. Deuxième noeud de réseau (MS, RS, BS) selon la revendication 9, le deuxième noeud de réseau (MS, RS, BS) étant une station mobile (MS), une station de relais (RS) ou une station de base (BS).
